(19) Europäisches Patentamt / European Patent Office / Office européen des brevets

(11) **EP 2 504 911 B1**

(12) **FASCICULE DE BREVET EUROPEEN**

(45) Date de publication et mention
de la délivrance du brevet:
**14.09.2016 Bulletin 2016/37**

(21) Numéro de dépôt: **10799106.9**

(22) Date de dépôt: **25.11.2010**

(51) Int Cl.:
***H02M 3/335*** *(2006.01)*

(86) Numéro de dépôt international:
**PCT/FR2010/052529**

(87) Numéro de publication internationale:
**WO 2011/067519 (09.06.2011 Gazette 2011/23)**

(54) **PROCÉDÉ DE CONVERSION CONTINU-CONTINU À PARTIR D'UNE SOURCE D'ÉNERGIE ÉLECTRIQUE CONTINUE**

VERFAHREN FÜR GLEICHSPANNUNGSWANDLUNG MIT EINER ELEKTRISCHEN GLEICHSTROMQUELLE

METHOD FOR DC-DC CONVERSION USING A DC ELECTRIC POWER SOURCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.11.2009 FR 0958392**

(43) Date de publication de la demande:
**03.10.2012 Bulletin 2012/40**

(73) Titulaire: **Centre National d'Etudes Spatiales
75001 Paris (FR)**

(72) Inventeur: **SCHWANDER, Denis
F-31860 Labarthe Sur Leze (FR)**

(74) Mandataire: **Lavoix
2, place d'Estienne d'Orves
75441 Paris Cedex 09 (FR)**

(56) Documents cités:
**EP-A1- 0 019 096     EP-A2- 1 406 373
JP-A- 2001 275 361     JP-A- 2005 168 236
US-A- 5 539 630**

**Description**

L'invention concerne un procédé de conversion d'énergie électrique fournie par une source d'énergie à tension et courant continus ayant des premières valeurs respectives en de l'énergie électrique à tension et courant de sortie continus ayant des secondes valeurs respectives. L'invention concerne également un convertisseur et continu-continu pour la mise en oeuvre de ce procédé ainsi qu'une installation comprenant plusieurs de ces convertisseurs.

Des convertisseurs continu-continu destinés à fournir de forts courants sous de faibles tensions sont déjà connus dans la technique. Ils sont notamment employés pour l'alimentation de satellites et autres consommateurs électriques analogues et comportent souvent un dispositif de régulation magnétique appelé « postrégulateur magnétique » par les spécialistes, prévu pour assurer une commutation du courant en vue de délivrer un courant de sortie sous une tension et/ou un courant régulé(s).

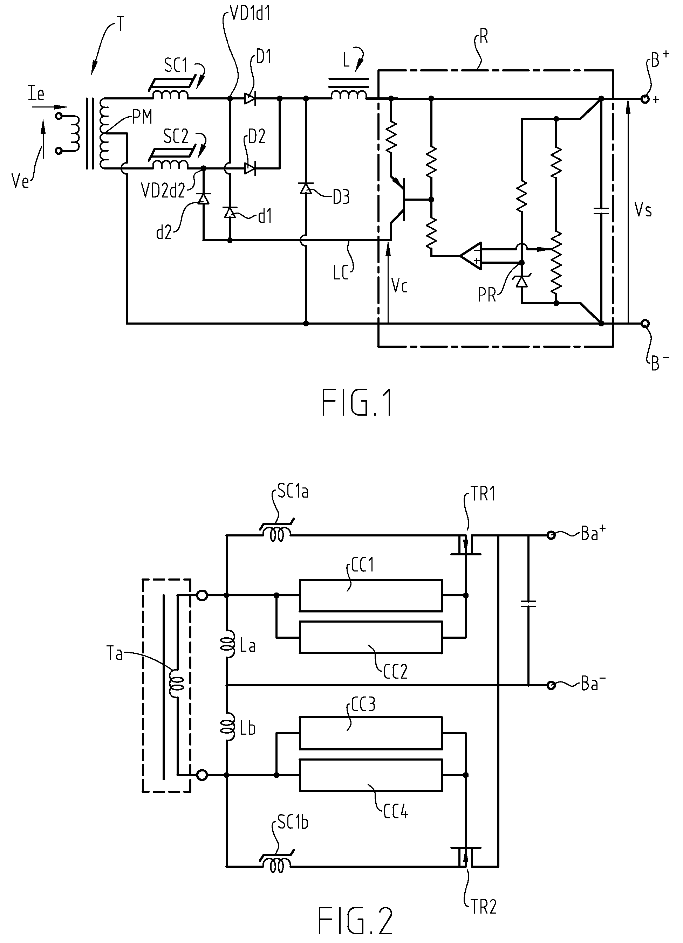

Dans un bulletin technique N°SR-4, publié en 1999 par la Société Magnetics, Butler, PA 16003, EUA, on décrit (voir la figure 1 des dessins annexés) un convertisseur continu/continu à postrégulateur magnétique. Il comprend un transformateur d'entrée T recevant sur son primaire un courant continu haché d'une source de courant continu (non représentée). Le secondaire de ce transformateur alimente par ses extrémités respectives deux selfs saturables SC1 et SC2 connectées par l'intermédiaire de diodes D1 et D2 à une self de lissage L reliée par ailleurs à la borne de sortie positive B+ du convertisseur.

La borne de sortie négative B- est connectée à une prise médiane PM du transformateur T. Un régulateur R produisant une référence de tension sur un point de référence PR injecte un signal de correction sur une ligne LC dans le circuit redresseur CR formé par les selfs SC1 et SC2 et les diodes D1 et D2 par l'intermédiaire de deux diodes supplémentaires d1 et d2 qui sont respectivement reliées aux points de jonction entre la self SC1 et la diode D1 d'une part et la self SC2 et la diode D2 d'autre part.

Le montage comprend également une diode « roue libre » D3 branchée entre le noeud de la diode D1 et la self de lissage L et la borne de sortie négative B- du convertisseur.

Ce convertisseur connu à postrégulateur magnétique fonctionne convenablement par commutation due à la saturation des selfs SC1 et SC2, mais présente l'inconvénient de nécessiter un transformateur T de construction assez complexe, car doté d'un secondaire formé de deux demi enroulements, et surtout d'une diode « roue libre » D3. Cette dernière introduit une dissipation d'énergie de commutation liée aux charges accumulées par sa capacité parasite. En outre le régulateur R est destiné à commander la tension de sortie par une modification du rapport cyclique de la commutation effectuée dans le convertisseur.

Par la demande de brevet japonais JP2001 275 361 et par le document US 5 539 630, on connaît un autre type de convertisseur continu/continu dont le schéma de principe est représenté sur la figure 2 des dessins annexés. Dans ce cas, on utilise un transformateur d'entrée Ta dont le secondaire ne comporte pas de prise médiane. Ce secondaire alimente deux selfs saturables SC1a et SC2a qui sont raccordées à une borne de sortie positive Ba+ par l'intermédiaire de transistors TR1 et TR2 respectifs. Les bornes du secondaire du transformateur Ta sont également connectées à des selfs de lissage La et Lb dont le noeud commun est relié à la borne de sortie négative Ba- du convertisseur. Les grilles des transistors TR1 et TR2 sont reliées respectivement à des circuits de commande de commutation CC1 à CC4 qui reçoivent leurs signaux d'entrée des bornes du secondaire.

Ce convertisseur connu constitue un doubleur de courant à redresseur synchrone et utilise des composants actifs pour obtenir la commutation. Les selfs saturables SC1a et SC2a ont ici pour fonction d'opérer, par compensation des transitoires, une commutation douce des composants actifs sans elles-mêmes participer à la détermination de la commutation. De plus, la tension de sortie est égale à la moitié de la tension de sortie du transformateur Ta et ce rapport est fixe et non régulé. Il s'agit donc d'un convertisseur qui, bien que présentant un transformateur d'entrée à secondaire unique, nécessite l'utilisation de composants actifs et de leurs circuits de commande de sorte qu'en définitive ce convertisseur est plus complexe que celui du document antérieur précédemment analysé. En outre, en considérant le domaine d'application préférentiel de la présente invention, la présence de composants actifs introduit un facteur d'insécurité de fonctionnement de par les risques de panne qui sont inhérents à l'utilisation de tels composants. Le montage est donc moins approprié pour être utilisé dans une application exigeant une fiabilité sans reproches telle que celle d'une alimentation pour satellite.

L'invention a pour but de fournir un procédé de conversion d'énergie électrique ainsi qu'un convertisseur continu/continu à sortie régulée mettant en oeuvre ce procédé et dépourvu de composants actifs et de diode de « roue libre » et dans certains cas d'un transformateur à secondaire divisé. L'invention a également pour but de fournir une installation de distribution d'énergie électrique comprenant plusieurs de ces convertisseurs.

L'invention a donc principalement pour objet un procédé de conversion de l'énergie électrique fournie par une source d'énergie délivrant une première tension et un premier courant continus ayant des premières valeurs respectives en de l'énergie électrique de sortie à une seconde tension et avec un second courant continus ayant des secondes valeurs respectives,

procédé consistant

    a) à soumettre le premier courant à une opération d'ondulation pour former un troisième courant alternatif à une troisième tension, ledit troisième courant à ladite troisième tension pouvant être mono- ou polyphasé,

b) à changer par une opération de transformation, la valeur de ladite troisième tension, ou la tension de chaque phase de celle-ci, pour obtenir au moins une tension transformée ayant ladite seconde valeur pendant que simultanément, le courant sous ladite tension transformée est redressé dans au moins une unité de conversion en étant soumis à une commutation magnétique au moyen d'une première et d'une seconde selfs saturables,

c) lesdites selfs saturables étant reliées dans un circuit série de redressement composé de ladite première self saturable, d'une première et d'une deuxième diodes de puissance en tête-bêche et de la seconde des selfs saturables, les deux diodes de puissance étant shuntées par deux diodes de régulation en tête-bêche avec des sens de redressement opposés à ceux des deux diodes de puissance,

d) ledit circuit série étant connecté pour recevoir ladite tension transformée et pour délivrer ladite énergie électrique sous forme d'au moins une partie dudit second courant continu,

le procédé consistant en outre

e) à réguler au cours de chaque cycle de la tension transformée les instants de la commutation magnétique en injectant à travers lesdites diodes de régulation, une tension de commande engendrée en fonction des variations de ladite seconde tension, et

f) à commander pendant une première partie de chacun desdits cycles, sous l'effet de la saturation de ladite première self saturable, la conduction de ladite première diode de puissance, et à commander pendant une deuxième partie de chaque cycle concerné, sous l'effet de la saturation de ladite deuxième self saturable, la conduction de ladite deuxième diode de puissance, les instants de mise en saturation étant déterminés pendant ce cycle en fonction de ladite tension de commande,

ledit procédé étant caractérisé en ce qu'

g) il consiste également au cours de ladite première partie dudit cycle à bloquer ladite deuxième diode de puissance par la mise en conduction de ladite première diode de puissance, et au cours de ladite deuxième partie du cycle considéré à bloquer ladite première diode de puissance par la mise en conduction de ladite deuxième diode de puissance, de manière à créer un déphasage entre ladite troisième tension et ledit troisième courant ou entre la tension et le courant de chaque phase de ceux-ci, l'angle de déphasage étant fonction de ladite tension de commande et en ce que les étapes de procédé b), e) f) et g) sont effectuées, le cas échéant, pour chaque phase de ladite troisième tension.

Grâce à ces caractéristiques, il devient possible de concevoir des convertisseurs continu-continu dépourvus de diodes « roues libres » ou de transistors de commutation, tout en ayant un fonctionnement stable parfaitement maîtrisé.

Selon d'autres caractéristiques avantageuses, le procédé selon l'invention peut également consister

- à lisser ledit courant redressé au moyen d'au moins une paire de selfs de lissage en série branchée sur ladite tension transformée, ladite seconde tension étant prélevée sur le noeud entre lesdites diodes de puissance et le noeud entre lesdites selfs de lissage d'une paire;
- à déterminer ladite tension de commande en fonction de ladite au moins une partie dudit second courant ;
- ladite tension de commande est déterminée en fonction d'une image dudit second courant prise soit à partir de la moyenne filtrée de deux tensions prises respectivement entre les bornes desdites selfs saturables opposées aux bornes qui sont connectées auxdites diodes de puissance, et un point de référence commun à ladite seconde tension et à ladite tension de commande, lorsqu'il s'agit du cas monophasé, soit à partir de l'ensemble des moyennes filtrées de ces tensions dans toutes les phases, lorsqu'il s'agit du cas polyphasé;
- à effectuer la détermination de ladite tension de commande à partir d'une image dudit second courant de la forme $Vc/k-Vs$, $Vc$ étant ladite troisième tension, $k$ étant une constante comprise entre 1 et 3 et $Vs$ étant ladite seconde tension;
- à référencer ladite tension de commande par rapport au potentiel positif de ladite seconde tension ;
- à référencer ladite tension de commande par rapport au potentiel négatif de ladite seconde tension.

L'invention a également pour objet un convertisseur continu-continu pour la mise en oeuvre du procédé tel que défini ci-dessus sous la forme de ses divers modes de réalisation.

C'est ainsi que, selon un premier mode de réalisation, le convertisseur continu-continu peut comprendre un onduleur, une unité de conversion et un régulateur, ladite unité de conversion comprenant un transformateur comportant un primaire relié audit onduleur et un secondaire dont les extrémités sont raccordées à un circuit série composé d'une première self saturable, de deux diodes de puissance en tête-bêche et d'une seconde self saturable, les deux diodes de puissance étant shuntées par deux diodes de régulation en tête-bêche avec des sens de redressement opposés à ceux des deux diodes de puissance, ladite unité de conversion comprenant également un second circuit série formé de deux selfs de lissage et connecté en parallèle audit secondaire dudit transformateur, ladite seconde tension étant prélevée entre le noeud commun desdites diodes de puissance et le noeud commun desdites selfs de lissage, et ladite tension de commande produite par ledit régulateur étant appliquée entre le noeud commun desdites diodes de régulation et le noeud commun desdites selfs de lissage.

Selon un autre mode de réalisation, le convertisseur continu-continu peut comprendre un onduleur, une unité de conversion et un régulateur, ladite unité de conversion comprenant un transformateur comportant un primaire relié audit onduleur et un secondaire dont les extrémités sont raccordées à un premier circuit série composé d'une première self saturable, de deux diodes de puissance en tête-bêche et d'une seconde self saturable, les deux diodes de puissance étant shuntées par deux diodes de régulation en tête-bêche avec des sens de redressement opposés à ceux des deux diodes de puissance, le secondaire dudit transformateur étant composé de deux demi-enroulements qui ont entre eux un faible couplage magnétique et qui sont couplés, de préférence fortement, respectivement chacun à une moitié de l'enroulement primaire dudit transformateur, moyennant quoi lesdits demi-enroulements font respectivement office à la fois de demi-secondaire pour la transformation et de self de lissage, ladite seconde tension étant prélevée entre le noeud commun desdites diodes de puissance et le noeud commun desdits demi-enroulements dudit transformateur, et ladite tension de commande produite par ledit régulateur étant appliquée entre le noeud commun desdites diodes de régulation et le noeud commun entre lesdites diodes de puissance.

Selon un troisième mode de réalisation, le convertisseur continu-continu peut également comprendre un onduleur, une unité de conversion et un régulateur, ladite unité de conversion comprenant un transformateur comportant un primaire relié audit onduleur et composé de deux demi-enroulements primaires connectés en série et un secondaire composé de deux demi-enroulements également connectés en série, les demi-enroulements du primaire formant respectivement avec les demi-enroulements du secondaire des paires composées chacune d'un demi-enroulement primaire et d'un demi-enroulement secondaire qui sont étroitement couplés entre eux, ledit primaire étant connecté audit onduleur et ledit secondaire étant connecté à un circuit série composé d'une première self saturable, de deux diodes de puissance en tête-bêche et d'une seconde self saturable, les deux diodes de puissance étant shuntées par deux diodes de régulation en tête-bêche avec des sens de redressement opposés à ceux des deux diodes de puissance, ledit convertisseur comprenant également une unique self de lissage raccordée entre le noeud commun desdits demi-enroulements secondaires et une borne de sortie de ladite unité de conversion portant le potentiel négatif de ladite seconde tension, la borne de sortie de cette unité portant le potentiel positif de celle-ci étant connectée au noeud commun desdites diodes de puissance, et ladite tension de commande produite par ledit régulateur étant appliquée entre le noeud commun desdites diodes de régulation et ladite borne de sortie de l'unité de conversion portant ledit potentiel négatif.

Dans le cadre du premier mode de réalisation défini ci-dessus, lesdites selfs de lissage comprennent un circuit magnétique commun sur lequel sont bobinés leurs enroulements respectifs, ce circuit magnétique présentant un entrefer associé en commun aux deux selfs de lissage, lesdits enroulements ayant un faible couplage entre eux assuré uniquement à travers ledit circuit magnétique, le sens de bobinage des deux enroulements étant tel que les flux qu'ils engendrent dans le circuit magnétique et qui sont dus aux composantes continues de courant, traversent ledit entrefer dans le même sens.

Dans le cadre du deuxième mode de réalisation décrit ci-dessus, le primaire dudit transformateur est bobiné sur deux circuits magnétiques élémentaires distincts pour former lesdits deux demi-enroulements primaires connectés en série, chacun de ces demi-enroulements étant couplé fortement ensemble avec un demi-enroulement respectif du secondaire du transformateur sur un circuit magnétique élémentaire. Dans ce cas, chacun desdits circuits magnétiques élémentaires peut être réalisé en forme de C ménageant ainsi un entrefer, ou en forme de tore.

Selon un agencement avantageux du premier mode de réalisation, les enroulements desdites selfs de lissage constituent également les secondaires dudit transformateur, et chacun de ces enroulements est bobiné ensemble sur ledit circuit magnétique de manière serrée, avec une moitié d'un enroulement dudit transformateur, les deux moitiés d'enroulement formant le primaire de ce dernier.

Dans le cadre du troisième mode de réalisation de l'invention, il peut être avantageux de munir ledit transformateur d'un circuit magnétique sur lequel sont bobinés deux jeux distincts de demi-enroulements localisés à des endroits différents sur le circuit magnétique du transformateur et composés chacun d'un demi-enroulement primaire et d'un demi-enroulement secondaire, les demi-enroulements de chaque jeu étant bobinés avec un couplage serré. Par ailleurs, la self unique peut présenter avantageusement un circuit magnétique en forme d'un tore.

D'ailleurs, il est à noter que dans tous les cas définis ci-dessus, les circuits magnétiques peuvent être toriques.

L'invention a également pour objet plusieurs modes de réalisation d'une installation de distribution d'énergie électrique, notamment pour satellite, permettant de mettre en oeuvre le procédé tel que défini ci-dessus par diverses combinaisons de ses caractéristiques.

Ainsi, selon un premier mode de réalisation d'une telle installation, celle-ci comprend un convertisseur continu-continu tel que défini ci-dessus et construit avec une pluralité d'unités de conversion, lesdites unités de conversion étant réparties en groupes d'au moins trois unités et les unités de conversion de chacun desdits groupes étant raccordées audit onduleur par un câble multifilaire commun.

Selon un second mode de réalisation de l'installation, celle-ci comprend un onduleur polyphasé, une pluralité d'unités de conversion, lesdites unités de conversion étant réparties en au moins un groupe d'au moins trois unités et, associé à chaque groupe un régulateur pour effectuer ladite opération de régulation, chaque unité de conversion d'un groupe d'unités comprenant un transformateur pour effectuer ladite opération de transformation de ladite troisième tension, les transformateurs des unités d'un groupe étant raccordés audit onduleur par l'intermédiaire d'un câble multifilaire, ledit régulateur appliquant aux unités d'un groupe la même tension de commande et dans un groupe d'unités de conversion les sorties de celles-ci sont connectées en parallèle pour fournir sur deux bornes de sortie de ce groupe la somme de leurs courants de sortie individuels en tant que second courant de sortie.

Dans ce cas, dans chacun desdits groupes d'unités de conversion, celles-ci peuvent être reliées en triangle ou en étoile.

Selon un troisième mode de réalisation, l'installation comprend un onduleur polyphasé, une pluralité d'unités de conversion, lesdites unités de conversion étant réparties en au moins un groupe d'au moins trois unités, et, associé à chaque groupe, un régulateur pour effectuer ladite opération de régulation, et pour effectuer ladite opération de transformation de ladite troisième tension, les unités de conversion d'un groupe d'unités sont associées à un transformateur commun à primaire polyphasé et présentant autant de secondaires qu'il y a d'unités de conversion dans le groupe, ce transformateur étant raccordé audit onduleur par l'intermédiaire d'un câble multifilaire, ledit régulateur appliquant aux unités d'un groupe la même tension de commande, et dans un groupe d'unités de conversion les sorties de celles-ci sont connectées en parallèle pour fournir sur deux bornes de sortie de ce groupe la somme de leurs courants de sortie individuels en tant que second courant de sortie.

Lorsque dans ce cas, il est prévu des selfs de lissage, celles appartenant aux unités de conversion d'un même groupe d'unités de conversion peuvent avantageusement être regroupées sur un circuit magnétique commun sur lequel sont bobinés leurs enroulements respectifs, ce circuit magnétique présentant un entrefer unique, le couplage de ces enroulements entre eux étant assuré uniquement à travers ledit circuit magnétique commun, le sens de bobinage desdits enroulements étant tel que les flux dus aux composantes continues de courant qui parcourent ces enroulements traversent ledit entrefer dans le même sens.

Dans cette dernière variante de l'installation, avantageusement, dans chaque groupe d'unités de conversion, les selfs de lissage regroupées sur ledit circuit magnétique commun peuvent respectivement également faire office de secondaires dudit transformateur unique dont les enroulements primaires sont divisés respectivement en deux demi-enroulements couplés chacun à l'un des enroulements secondaires faisant également office de selfs de lissage de l'unité de conversion à laquelle ils sont reliés.

Selon un autre mode de réalisation de l'invention, celle-ci peut comprendre au moins un convertisseur construit avec une pluralité d'unités de conversion alimentées par un transformateur commun comprenant une pluralité de secondaires à raison d'un par unité. Chacune de ces unités de conversion peut alors être pourvue de son propre régulateur.

Selon encore un autre mode de réalisation de l'installation, celle-ci peut comprendre un convertisseur construit avec une pluralité d'unités de conversion agencées en au moins un groupe d'unités de conversion alimentées par l'intermédiaire d'un transformateur commun raccordé par son primaire audit onduleur et comprenant autant de secondaires qu'il y a d'unités de conversion dans un groupe, l'une desdites unités de conversion d'un groupe pouvant être une unité de conversion pilote formée d'un redresseur mono-alternance dépourvu de moyens de déphasage, ledit onduleur étant réglable, et il peut être prévue une boucle de réglage agissant sur ledit onduleur pour le régler en fonction d'un signal de différence entre un signal de référence de tension et un signal fonction de la tension de sortie de ladite unité de conversion pilote, les autres unités de conversion d'un groupe étant alors pourvues de leur propre régulateur.

L'invention est décrite de façon plus détaillée à propos d'exemples de réalisation et en se référant aux dessins.

Les figures 1 et 2 déjà décrites représentent des schémas de convertisseurs continu/continu de la technique antérieure ;

la figure 3 représente un schéma d'un mode de réalisation préféré du convertisseur continu/continu selon l'invention, la partie en pointillés de la figure représentant un moyen optionnel simple pour mesurer le courant de sortie du convertisseur;

la figure 4 est un diagramme dont les courbes illustrent le fonctionnement de l'unité de conversion faisant partie du convertisseur représenté sur la figure 3 ;

la figure 5 montre par ses sections a) à f) plusieurs autres aspects du fonctionnement de l'unité de conversion représentée sur la figure 3 ;

la figure 6 montre un exemple d'une courbe possible du flux en fonction du courant caractérisant un exemple de self saturable pouvant être utilisée dans l'unité de conversion selon l'invention ;

la figure 7 montre des courbes de la tension de commande en fonction de la tension de sortie d'une unité de conversion selon l'invention afin d'en illustrer le fonctionnement en limitation de courant ;

la figure 8 montre un diagramme illustrant le fonctionnement de l'unité de conversion sous deux régimes de puissance différents ;

les figures 9 et 10 représentent deux variantes possibles de l'unité de conversion basée sur le mode de réalisation de la figure 3 dans le cas d'une régulation en tension;

la figure 11 montre un schéma de principe d'un convertisseur du type de la figure 3 dans le cas d'une régulation en courant;

les figures 12 et 13 sont des schémas de deux variantes d'unités de conversion selon l'invention avec différents régulateurs de courant ;

la figure 14 montre un schéma d'une unité de conversion selon l'invention dans laquelle sont utilisées des selfs de lissage confondues avec des enroulements secondaires d'un transformateur;

la figure 15 montre un schéma d'une unité de conversion selon l'invention dans laquelle sont utilisés une self de lissage unique et un transformateur comportant deux jeux de demi-enroulements formés chacun d'un demi-enroulement primaire et d'un demi-enroulement secondaire, le tout étant bobiné sur un noyau commun ;

les figures 16 à 19 montrent des variantes de construction possibles de circuits magnétiques pour la réalisation des composants électromagnétiques utilisés dans les unités de conversion représentées sur les figures 3 à 15;

la figure 20 montre une installation de distribution d'énergie électrique, notamment pour satellite de télécommunication, comprenant un convertisseur selon l'invention avec une pluralité d'unités de conversion du type représenté notamment sur la figure 3, les unités de conversion étant connectées individuellement à l'onduleur du convertisseur;

la figure 21 est un schéma analogue à celui de la figure 20 et montre une installation de distribution d'énergie électrique dans laquelle le convertisseur comprend un onduleur triphasé alimentant une pluralité de groupes d'unités de conversion connectées selon un schéma triphasé, ici en étoile;

la figure 22 est un schéma partiel d'une installation de distribution d'énergie électrique du type représenté sur la figure 21, dont on n'a ici représenté qu'un seul groupe, les unités de conversion de chaque groupe d'unités du convertisseur étant montées en triangle;

la figure 23 est un schéma partiel d'une installation de distribution d'énergie électrique comprenant des unités de conversion dont le schéma est globalement semblable à celui des unités représentées sur les figures 21 et 22, mais dont dans chaque groupe d'unités de conversion, on ne prévoit qu'un seul transformateur commun pour ces unités, la partie en pointillés de la figure illustrant un moyen optionnel simple pour mesurer le courant de sortie de l'ensemble;

la figure 24 est une vue en perspective schématique d'un circuit magnétique pouvant avantageusement être utilisé pour la réalisation des selfs de lissage des unités de conversion, lorsque celles-ci sont regroupées par trois;

la figure 25 montre un schéma de bobinage du circuit magnétique de la figure 24 dans le cas où celui-ci est appliqué pour la réalisation de selfs de lissage dans des unités de conversion regroupées par trois;

la figure 26 est un schéma simplifié d'un groupe de conversion utilisant le schéma de bobinage conformément à la figure 25 ;

la figure 27 est un schéma de bobinage d'un groupe de conversion comprenant trois unités de conversion conçues conformément à l'unité de la figure 14 et dans lequel est utilisé le circuit magnétique de la figure 24, qui reçoit également dans ce cas les enroulements primaires de transformation coopérant avec les enroulements des selfs de lissage formant en même temps des secondaires de transformation ;

les figures 28 et 29 sont des schémas de convertisseurs dans lesquels sont prévus des principes différents de régulation de la tension de sortie des unités de conversion.

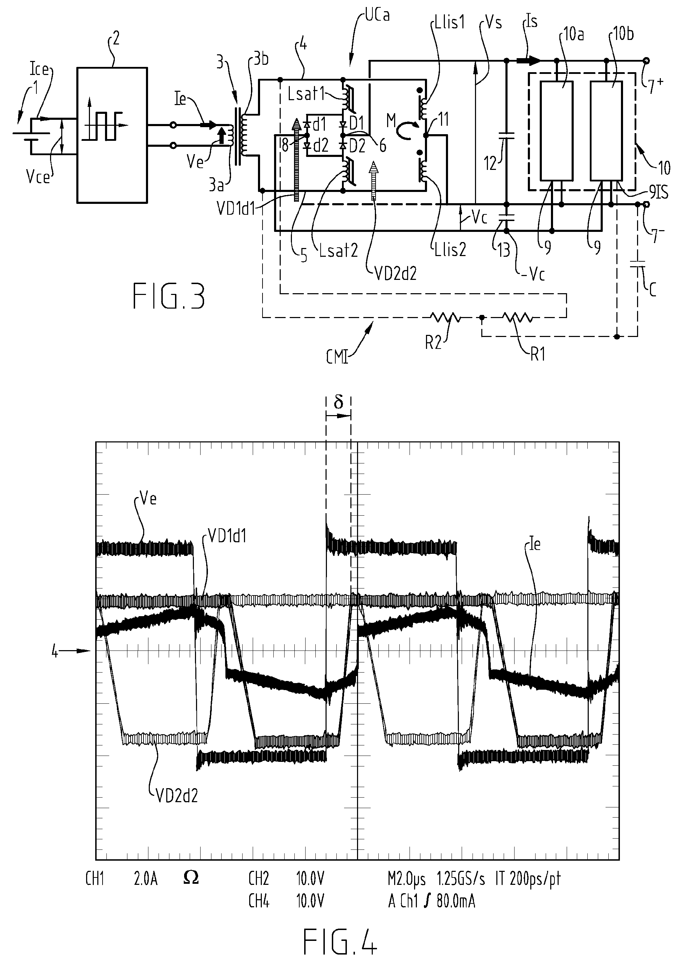

On va d'abord se référer à la figure 3 qui représente le mode de réalisation préféré dans lequel est mis en oeuvre le procédé selon l'invention. Dans ce cas, le convertisseur continu/continu est alimenté à partir d'une source 1 de courant continu, par exemple la barre de puissance primaire d'un satellite de télécommunications. Cette source 1 fournissant un courant continu d'entrée Ice sous une tension continue d'entrée Vce alimente un onduleur 2 à tension symétrique dont la sortie est reliée à une unité de conversion alternatif-continu UCa appelée parfois « postrégulateur symétrique » par les spécialistes. Cette unité de conversion UCa comprend un transformateur 3 équipé d'un primaire 3a et d'un secondaire 3b constitué par un seul enroulement. Dans l'exemple, le rapport entre le nombre de tours ns du secondaire 3b et celui np du primaire 3a peut être de ns/np = 2/1.

L'une des bornes du secondaire 3b est reliée à un noeud 4 auquel sont raccordées une première self saturable Lsat1 et une première self de lissage Llis1. L'autre borne du secondaire 3b est connectée à un noeud 5 auquel sont raccordées une seconde self saturable Lsat2 et une seconde self de lissage Llis2.

Entre les selfs saturables Lsat1 et Lsat2 sont insérées deux paires de diodes. La première paire comprend des première et seconde diodes de puissance D1 et D2 en tête-bêche dont le noeud 6 est connecté à la borne de sortie positive 7+ de l'unité de conversion UCa, les cathodes des diodes de puissance D1 et D2 étant reliées ensemble.

L'autre paire de diodes comprend des diodes de régulation d1 et d2, également en tête-bêche, dont le noeud 8 est relié à deux sorties de commande 9 d'un régulateur 10 faisant aussi partie de l'unité de conversion UCa. Les anodes des diodes de régulation d1 et d2 sont connectées ensemble.

Le régulateur 10 est composé de deux blocs de régulation 10a et 10b, l'un pour la tension de sortie Vs et l'autre pour le courant de sortie Is. Le régulateur 10 sera décrit en détail par la suite. Il fournit une tension de commande -Vc qui peut dépendre du bloc de régulation 10a, lorsque le courant de sortie Is est inférieur à un courant de consigne considéré comme le courant de sortie maximum admissible ou qui peut dépendre du bloc de régulation 10b lorsque la tension de sortie Vs est inférieure à une tension de consigne, ce qui signifie une surcharge. Les deux blocs de régulation 10a et 10b agissent donc sur la même tension de commande -Vc.

Les selfs de lissage Llis1 et Llis2 sont reliées ensemble et leur noeud 11 est connecté à la borne de sortie négative 7- de l'unité de conversion UCa. Un condensateur 12 est relié entre les bornes 7+ et 7-, de même qu'un condensateur 13 est relié entre la borne de sortie 7- et les bornes de sortie 9 du régulateur 10. Les selfs de lissage peuvent avoir un couplage mutuel M plus ou moins serré.

La figure 4 montre à titre d'exemple un diagramme des principaux signaux présents dans l'unité de conversion UCa de la figure 3 dans le cas d'un rapport de transformation ns/np = 2/1 du transformateur 3. Il représente deux cycles consécutifs du processus de conversion produisant dans cet exemple en sortie (bornes 7+ et 7-) un courant de sortie Is de 1A sous une tension de sortie Vs = 10V. Dans ce cas, la tension d'entrée Ve a une amplitude de 20V sur le primaire 3 et la tension sur le secondaire 3b a une amplitude de 40V. Le courant de commande Ic issu du régulateur 10 est alors de quelques mA sous une tension de -17V. Selon l'invention, la tension de commande Vc permet dans ces conditions de maintenir un déphasage δ entre le courant d'entrée Ie et la tension d'entrée Ve afin de réguler la tension de sortie Vs. Le diagramme de la figure 4 montre à titre d'illustration ces derniers paramètres et les tensions régnant respectivement sur le noeud des diodes D1, d1 d'une part (VD1d1) et celui des diodes D2, d2 d'autre part (VD2d2). Les courbes de différents grisés correspondent aux différents grisés des flèches de la figure 3. Bien entendu, les valeurs mentionnées ci-dessus des tensions et des courants ne sont indiquées qu'à titre d'exemple illustratif.

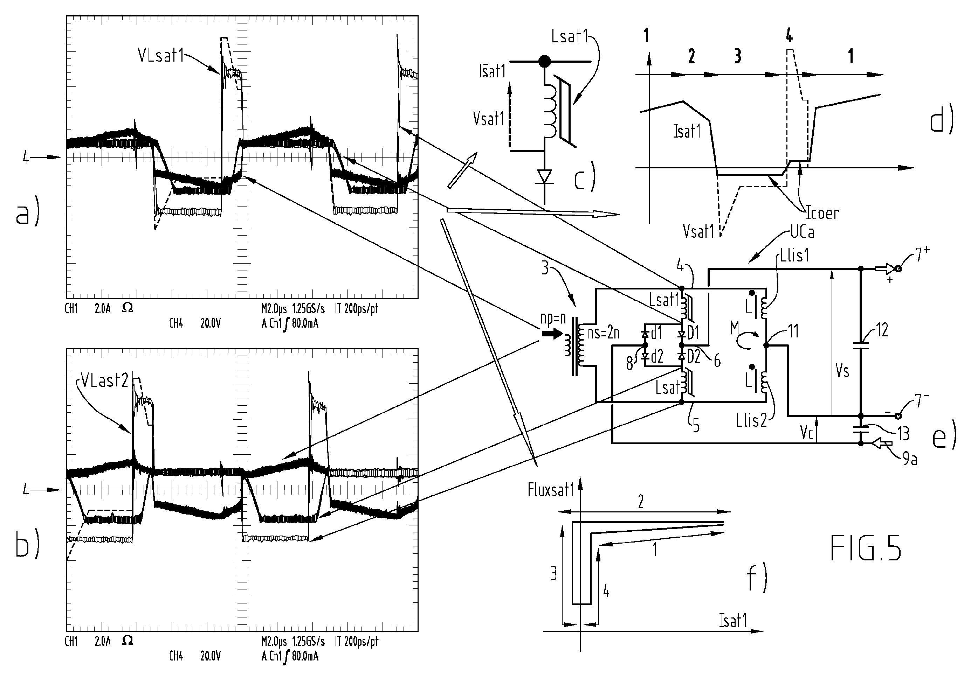

La figure 5 est destinée à expliciter davantage l'exemple de l'unité de conversion UCa représentée et illustrée sur les figures 3 et 4. Cette figure représente :

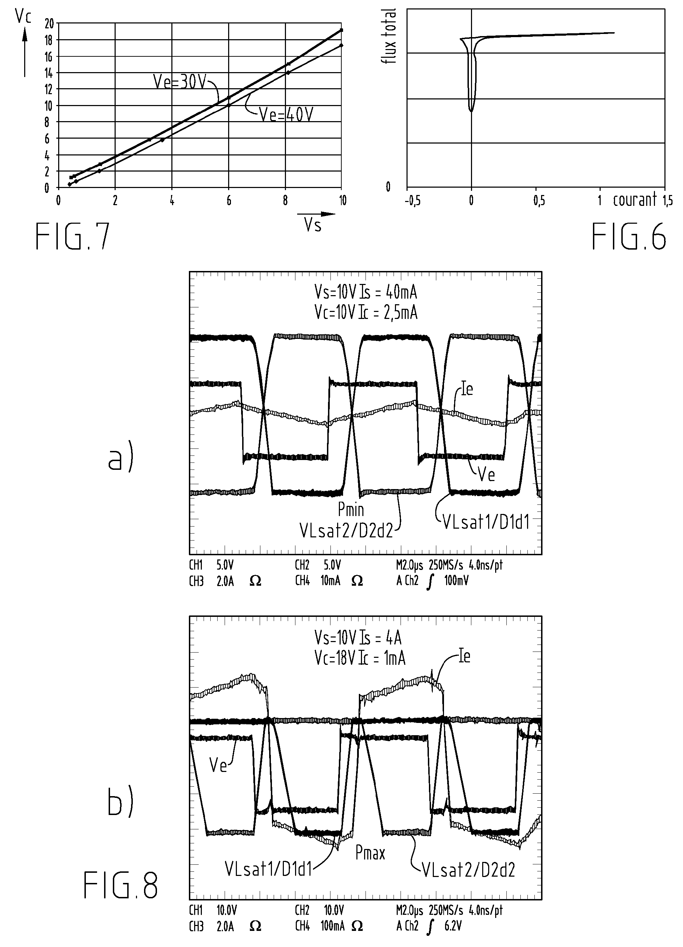

en a) : le diagramme des courbes en fonction du temps relevant plus particulièrement de la self saturable Lsat1 ;
en b) : le diagramme des courbes en fonction du temps relevant plus particulièrement de la self saturable Lsat2 ;
en c) : le schéma de la self saturable Lsat1 avec son courant Isat1 et la tension Vsat1 à ces bornes ;
en d) : l'allure du courant Isat1 en fonction du temps au cours de quatre phases 1 à 4 d'une période de fonctionnement de l'unité de conversion UCa;
en e) : un rappel du schéma de la figure 3 avec renvoi par des flèches vers les différents éléments concernés de la figure 5 ; et

en f): le diagramme d'hystérèse théorique de la self saturable Lsat1 montrant l'évolution de son flux Fluxsat1 en fonction du courant Isat1 pendant les quatre phases 1 à 4 d'un cycle de fonctionnement. Il est à noter que la figure 6 présente un exemple réel d'un tel diagramme d'hystérèse pour une self saturable utilisable dans l'invention.

Les diagrammes a) et b) de la figure 5 montrent l'allure des tensions VLsat1 et VLsat2 présentes respectivement sur les noeuds 4 et 5 du circuit de l'unité de conversion UCa, les tensions VLsat1 VLsat2 étant par ailleurs représentées respectivement par rapport à leurs courants correspondants Isat1 et Isat2 parcourant respectivement les selfs saturables Lsat1 et Lsat2 pendant un cycle de fonctionnement.

Le fonctionnement de ce circuit est basé sur la constatation qu'en négligeant les temps de décharge des capacités des diodes D1, D2, d1 et d2, la valeur du flux total présent dans les éléments électromagnétiques du montage (transformateur 3, selfs saturables Lsat1, Lsat2 et selfs de lissage Llis1 et Llis2) ne doit pas varier pour un instant quelconque du cycle, d'un cycle à l'autre. En d'autres termes, on retrouvera la même valeur pour ce flux à un instant donné des cycles successifs de fonctionnement. Ceci implique que durant chaque cycle, l'aire positive et l'aire négative des tensions régnant aux noeuds 4 et 5 sont égales l'une à l'autre, ce qui est illustré dans le diagramme d) de la figure 5 par le trait en pointillés. Par ailleurs, la tension de sortie Vs est directement liée à la tension d'entrée Ve par la valeur du déphasage entre la tension d'entrée et la tension de sortie. Dans ces conditions, la tension de sortie Vs du montage est donc directement régulée par la tension de commande Vc issue du régulateur 10.

Ces conditions déterminent le déphasage et peuvent s'exprimer de la façon suivante pour un transformateur de rapport 1 (np=ns). Pour un rapport de transformation différent, le terme Ve sera multiplié par ce rapport :

$$(1-\partial)*(V_e - V_s - V_c) = \partial * V_e$$

$$V_s = \frac{1}{2} * (1 - 2*\partial) * V_e$$

dans laquelle :

$\partial$ le déphasage entre la tension d'entrée Ve et la tension de sortie Vs exprimé en rapport d'angle par rapport à 180°;
Ve tension fournie par le secondaire 3b du transformateur 3 ;
Vs tension de sortie sur les bornes 7+ et 7- ;
Vc tension de commande issue du régulateur 10.

Il en résulte que :

$$\partial = \frac{1}{2} - \frac{V_s}{V_e}$$

$$V_c = \frac{3/2 - V_s/V_e}{1/2 + V_s/V_e} * V_s$$

Dans ces conditions et toujours en négligeant la capacité des diodes:

pour Vs=Ve/2     Vc=Vs=Ve/2 et déphasage = 0
pour Vs=0         Vc=0 et déphasage = 90°.

Dans un cas réel, en tenant compte du temps de décharge de ces capacités, la relation devient plus linéaire et peu dépendante de Ve, comme on peut le constater sur l'exemple de la figure 7:

$$V_s \approx k * V_c$$

avec

$$k \sim 10/17$$

Cette dernière relation est illustrée par les courbes de la figure 7 qui montre la relation entre Vc et Vs pour une tension continue d'entrée à l'onduleur de 30 V et 40 V respectivement, avec un courant de sortie Is constant de 4A. (pour information, compte tenu du rapport de transformation, la tension Ve est dans ce cas de 15 à 20V au primaire 3a et de 30 à 40V au secondaire 3b).

La figure 5d) montre par ailleurs que le courant coercitif Icoer des selfs saturables Lsat1 et Lsat2 circulant pendant les phases 3 et 4 du cycle de fonctionnement présente une valeur relativement faible comparée à la valeur du courant qui y circule durant les phases de fonctionnement 1 et 2. Il en résulte que l'on peut réguler le courant avec une quantité d'énergie très faible.

Les figures 5f) et 6 montrent respectivement la forme théorique et un exemple d'une forme réelle du cycle d'hystérésis des selfs saturables Lsat1 et Lsat2.

Les figures 4 à 6 permettent ainsi de constater que le procédé selon l'invention assure, pendant une première partie de chacun des cycles et sous l'effet de la saturation de la première self saturable, la conduction de la première diode de puissance associée à cette self et, pendant une deuxième partie de chaque cycle et sous l'effet de la saturation de la deuxième self saturable, la conduction de la deuxième diode de puissance. En outre, le procédé permet au cours de la première partie de chaque cycle de bloquer la deuxième diode de puissance par la mise en conduction de la première diode de puissance et au cours d'une deuxième partie de chaque cycle de bloquer la première diode de puissance par la mise en conduction de la deuxième diode de puissance d'où il résulte en définitive le déphasage recherché entre la tension d'entrée et le courant d'entrée.

La figure 8 montre respectivement en a) et b), des exemples des courbes des paramètres principaux d'un exemple de l'unité de conversion UCa selon l'invention fonctionnant avec une puissance minimale Pmin et une puissance maximale Pmax, ces paramètres étant respectivement la tension VLsat1/D1d1 sur le noeud entre la self Lsat1 et les diodes D1 et d1, la tension VLsat2/D2d2 sur le noeud entre la self Lsat2 et les diodes D2 et d2, la tension d'entrée Ve et le courant d'entrée Ie, les courbes étant tracées avec des nuances de gris décroissantes dans l'ordre indiqué allant du noir au gris clair. Les valeurs de la tension de sortie Vs, de la tension de commande Vc, du courant de sortie Is et du courant de commande Ic sont indiquées au-dessus des diagrammes dans les deux cas des puissances Pmin et Pmax. On voit que ces dernières ont un rapport de 1000 entre elles.

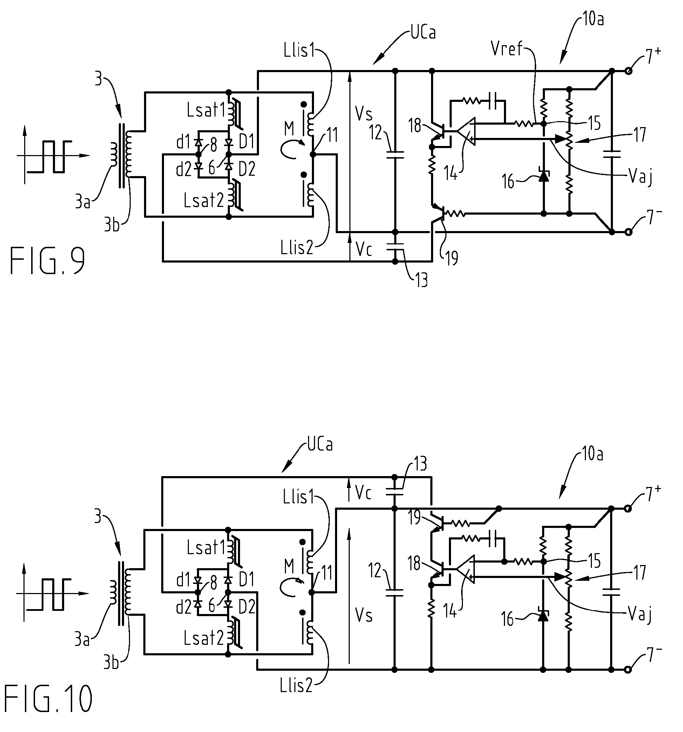

Les figures 9 et 10 montrent deux configurations possibles de l'unité de conversion selon l'invention, la figure 9 reprenant celle UCa représentée sur la figure 3 et comprenant également un schéma plus détaillé d'un bloc 10a de régulation de la tension du régulateur 10.

Ce bloc 10a comprend un amplificateur opérationnel 14 dont les entrées reçoivent respectivement une référence de tension Vref établie sur un noeud 15 par une diode Zener 16, et une tension d'ajustement Vaj provenant d'un diviseur de tension réglable 17. La sortie de l'amplificateur 14 commande un transistor 18 fixant avec un autre transistor en série 19, la tension de commande Vc apparaissant sur l'une des bornes 9 du régulateur 10. Dans le cas de la figure 9, la tension de commande Vc est référencée par rapport au potentiel de la borne de sortie négative 7-. Dans ce cas, le courant envoyé dans les selfs saturables Lsat1 et Lsat2 pour rétablir leur flux magnétique est positif (courant dit de « reset »).

Dans le cas de la figure 10 par contre qui concerne toujours la variante de l'unité de conversion UCa, la tension de commande Vc est référencée par rapport au potentiel de la borne de sortie positive 7+, les transistors 18 et 19 étant connectés en conséquence. Dans ce cas le courant de reset est négatif.

On notera que l'information concernant le courant de sortie Is peut être obtenue de façon classique dans le bloc de régulation 10b afin que celui-ci puisse élaborer la tension de commande Vc.

Mais cette information peut également être obtenue de façon simple en créant une image de ce courant de sortie Is par exemple au moyen du circuit de mesure CMI représenté en pointillés sur la figure 3.

Ce circuit comprend deux résistances en série R1 et R2 connectées respectivement aux bornes du secondaire 3b du transformateur 3. Le noeud commun entre les résistances R1 et R2 est relié d'une part à une capacité de filtrage C connectée par ailleurs à la borne 7- de l'unité de conversion UCa et d'autre part à une entrée 9IS du bloc de régulation 10b.

L'image du courant de sortie Is peut être obtenue dans le bloc de régulation 10b en effectuant un moyennage dans le temps des deux tensions régnant aux bornes du secondaire 3b et référencées au point commun (ici la borne de sortie 7-) des tensions de sortie Vs et de commande Vc.

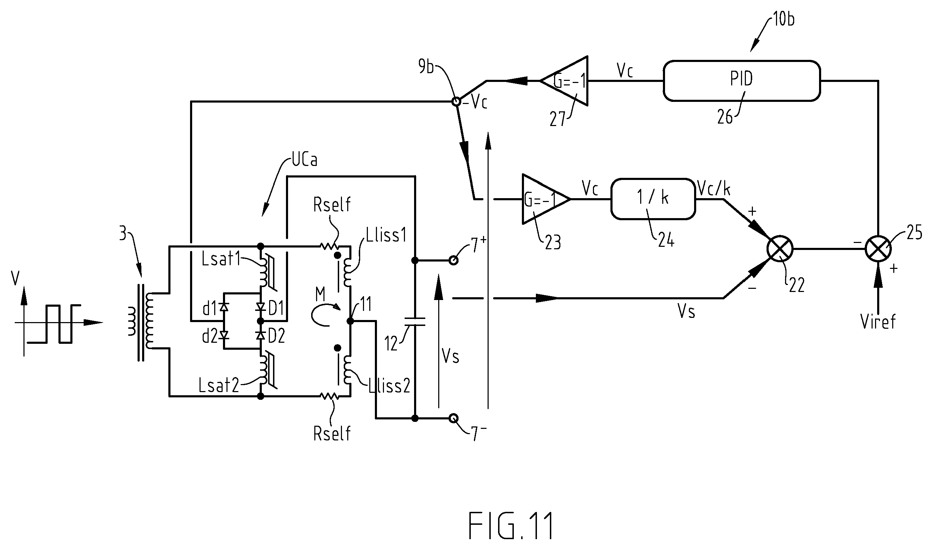

La figure 11 montre un schéma de principe d'une régulation du courant de sortie Is effectuée par le bloc de régulation de courant 10b du régulateur 10 de la figure 3, mais uniquement à partir de l'information de la tension de commande Vc et de la tension de sortie Vs.

En effet, dans un circuit doubleur de tension réel du type représenté jusqu'ici sur les figures, en tenant compte des résistances des selfs et des capacités des diodes, on peut considérer que

$$\frac{V_e}{k} - V_s = \frac{R_{self} * I_s}{2}$$

dans laquelle Rself représente la résistance de chacune des selfs de lissage Lliss1 et Lliss2,
et dans laquelle k est de nouveau une constante qui rend compte du comportement réel, notamment des capacités des diodes, k pouvant en pratique être égal à 1,7 pour un type donné de diodes, comme déjà indiqué ci-dessus.

On peut envisager de réguler le courant de sortie Is en se basant sur un estimateur du courant du type :

$$\varepsilon = \frac{V_c}{k} - V_s$$

dans laquelle ε est une tension image du courant alors régulé en agissant sur Vc mais avec comme seules informations les tensions Vs et Vc. La constante k est fixée ici également en fonction de la capacité des diodes du montage et peut être située entre 1 et 3, par exemple.

Le schéma de la figure 11 montre le principe d'une telle régulation de courant avec une tension de référence Viref fixée à Rself*Is/2 et une valeur de k égale à 1,7.

Dans cette figure 11, on retrouve le schéma de la figure 3 allié à un schéma de principe d'un bloc de régulation de courant 10b apte à mettre en oeuvre le principe de régulation de courant qui vient d'être énoncé. La tension de sortie Vs de l'unité de conversion UCa est appliquée à l'entrée négative d'un sommateur 22 qui reçoit sur son entrée positive une valeur Vc/k, obtenue à partir d'un inverseur 23 recevant la valeur négative de la tension de commande Vc, et d'un bloc de calcul 24 fournissant l'inverse de la valeur k.

La sortie du sommateur 22 est transmise à l'entrée négative d'un autre sommateur 25 qui reçoit sur son entrée positive la valeur de la tension de référence Viref. Sa sortie est reliée à un régulateur PID 26 élaborant la valeur Vc qui, en étant inversée par un inverseur 27, est appliquée au convertisseur.

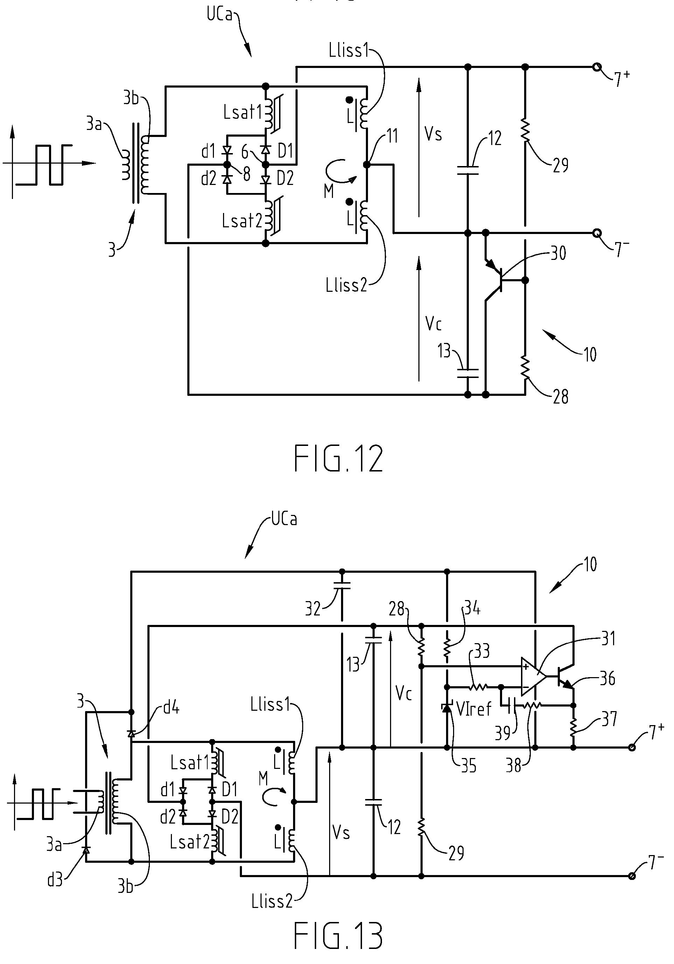

La figure 12 représente une réalisation pratique très simplifiée d'une régulation de courant basée sur le schéma de la figure 11 et associée à la version de l'unité de conversion représentée sur la figure 9.

Un diviseur de tension composé de deux résistances 28 et 29 effectuant les opérations symbolisées en 22, 23 et 24 sur la figure 11 applique une tension de régulation à un transistor 30 imposant la valeur de la tension de commande Vc en effectuant ainsi les opérations symbolisées en 26 et 27 sur la figure 11. Suivant le rapport k choisi pour l'estimateur de courant, les résistances 28 et 29 sont choisies de telle façon que le rapport de leurs valeurs soit égale à k, avec R28/R29=k, k pouvant typiquement être compris entre 1 et 3. Cette réalisation présente une précision de régulation limitée, car elle dépend de la tension de seuil du transistor 30.

Ce mode de réalisation constitue une unité de conversion limitée en courant que l'on peut aussi équiper d'une régulation en tension telle que celle représentée en 10a sur la figure 3. La valeur de la limitation de courant correspond à la relation

$$I_{s\,max} = \frac{4 * V_{sj}}{R_{self}}$$

dans laquelle Ismax est le courant de sortie maximal de l'unité de conversion, Vsj la tension de seuil du transistor 30 et Rself la résistance des selfs saturables Lsat1 et Lsat2 (ici non représentée).

Un mode de réalisation préféré d'une régulation alliant celle de la tension et celle du courant est représenté sur la figure 13. Il est toujours basé sur le schéma de régulation de la figure 11, mais associé cette fois à la version de l'unité de conversion représentée sur la figure 10. Le régulateur 10 de la figure 13 comprend un amplificateur opérationnel 31 alimenté à partir du secondaire 3b du transformateur 3 à travers deux diodes d3 et d4 et un condensateur de lissage 32. L'entrée non inverseuse de l'amplificateur 31 est reliée au diviseur de tension formé par les résistances 28 et 29 effectuant les opérations 22, 23 et 24 de la figure 11 à l'identique par rapport au schéma de la figure 12. L'entrée inverseuse de l'amplificateur 31 est reliée à travers une résistance 33 à un noeud entre une résistance 34 et une diode Zener 35 afin de recevoir une tension de référence Vref fixée grâce à cette dernière.

La sortie de l'amplificateur 31 est reliée à la base d'un transistor 36 dont l'émetteur est connecté d'une part à la borne positive 7+ du convertisseur par l'intermédiaire d'une résistance 37 et d'autre part à l'entrée inverseuse de l'amplificateur opérationnel 31 par l'intermédiaire d'une résistance 38 et d'un condensateur 39 formant ensemble le terme PID du régulateur 10.

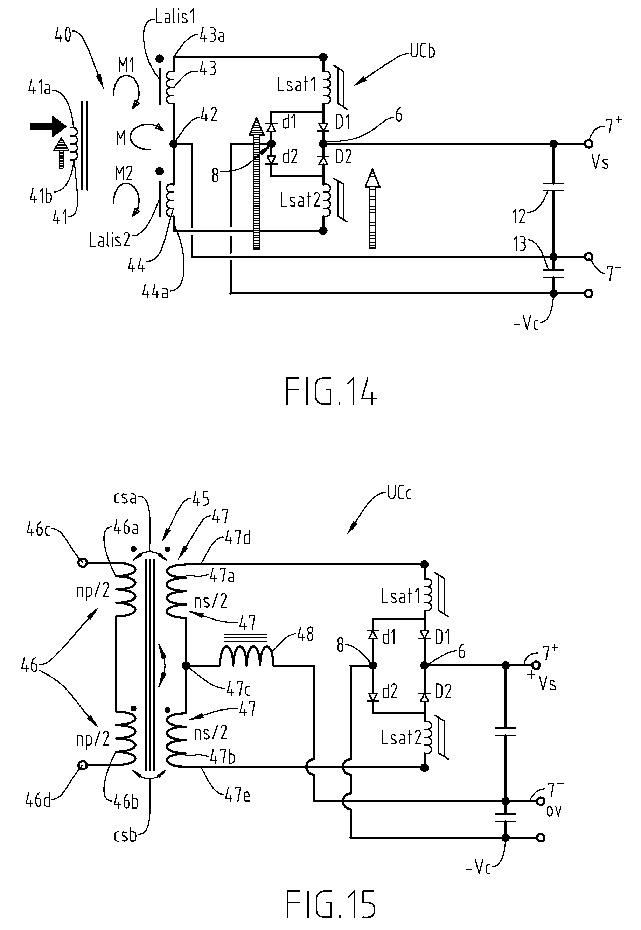

La figure 14 représente une variante d'unité de conversion UCb du convertisseur selon l'invention, dans laquelle on a conçu de façon particulière les selfs de lissage.

Comme représenté sur cette figure, ces selfs de lissage, ici désignées respectivement par les références Lalis1 et Lalis2 peuvent être confondues avec le secondaire d'un transformateur 40 faisant en même temps office de transformateur d'entrée comme le fait le transformateur 3 des précédentes figures. Les bornes 41a et 41 b du primaire 41 de ce transformateur 40 sont reliées à un onduleur, ici non représenté, tandis que le secondaire est pourvu d'un enroulement à point milieu 42, chaque partie de secondaire 43 et 44 formant aussi l'une des selfs de lissage Lalis1 et Lalis2 dont les bornes opposées au point milieu 42 sont désignées respectivement par les références 43a et 44a. Dans ce cas, les enroulements secondaires 43 et 44 du transformateur 40 ont un faible couplage M entre eux, mais, par contre, un bon couplage, respectivement M1 et M2, avec les moitiés respectives (ici non dessinées de façon différenciée) de l'enroulement primaire 41, moyennant quoi le convertisseur présente le même comportement que celui des modes de réalisation déjà décrits, mais avec l'intérêt supplémentaire de limiter la composante alternative du courant qui circule dans le circuit série des deux selfs de lissage Laliss1 et Laliss2 et donc de limiter les pointes de courant dans chacune d'elles.

La figure 15 représente une autre variante d'unité de conversion UCc comprenant un transformateur 45 dont le primaire 46 est divisé en deux demi-enroulements 46a et 46b connectés en série sur la sortie d'un onduleur (non représenté) par l'intermédiaire des bornes 46c et 46d. Ce transformateur 45 comprend également un secondaire 47 également formé de deux demi-enroulements 47a et 47b reliés en série. Les paires de demi-enroulements 46a-47a et 46b-47b ont respectivement un couplage serré entre eux comme l'indiquent les flèches csa et csb.

Les paires de demi-enroulements forment ainsi deux jeux distincts, respectivement 46a, 47a et 46b, 47b, localisés à des endroits différents sur le circuit magnétique du transformateur 45.

Les nombres de tours des demi-enroulements 46a et 46b sont égaux (ils valent np/2 chacun, avec np nombre de tours total du primaire 46), comme le sont les nombres de tours des demi-enroulements 47a et 47b (ils valent ns/2 chacun avec ns nombre de tours total du secondaire), le rapport de transformation souhaité déterminant naturellement les valeurs de np et de ns.

Le point milieu 47c du secondaire 47 est connecté à une unique self de lissage 48 à travers laquelle ce noeud 47c est relié à la borne de sortie 7- de ce montage. L'agencement des diodes D1, D2, d1 et d2 ainsi que celui des selfs saturables Lsat1 et Lsat2 sont identiques à ceux des précédentes figures, les selfs étant respectivement reliées aux bornes d'extrémité 47d et 47e des demi-enroulements 47a et 47b.

Bien entendu et bien que cela ne soit pas représenté sur les figures 14 et 15, les unités de conversion UCb et UCc de ces figures peuvent être raccordées à un onduleur 2 et à des blocs de régulation 10a et/ou 10b d'une façon semblable à celle qui est illustrée sur la figure 3 pour ce qui concerne l'unité de conversion UCa.

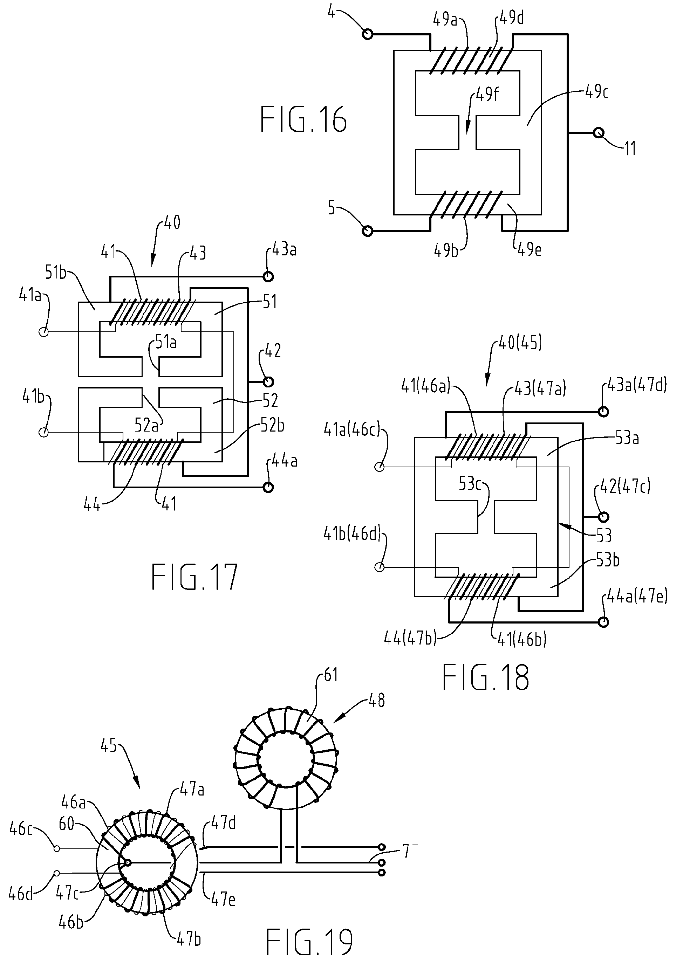

Les figures 16 à 19 représentent quatre variantes possibles de réalisation des selfs de lissage et/ou des transformateurs pouvant être utilisés dans les diverses unités de conversion UCa à UCc décrites jusqu'ici.

Tout d'abord, la figure 16 représente une réalisation avantageuse des selfs de lissage Llis1 et Llis2 pouvant être utilisées dans les unités de conversion UCa des figures 3, et 9 à 13. Dans ce cas, les selfs sont formées d'enroulements respectifs 49a, 49b bobinés sur un noyau commun 49c en un matériau magnétique. Le noyau 49c présente généralement la forme de deux E accolés par leurs branches extérieures 49d et 49e autour desquelles sont respectivement bobinés les enroulements 49a et 49b, leurs branches intérieures ayant une longueur telle qu'entre elles soit ménagé un entrefer 49f. Les enroulements 49a et 49b de cet ensemble sont insérés dans l'unité UCa en étant connectés aux noeuds 4, 5 et 11 comme indiqué sur la figure 16.

Les variantes représentées sur les figures 17 à 19 sont destinées à être utilisées plus particulièrement dans les unités de conversion UCb et UCc des figures 14 ou 15.

Dans la variante de la figure 17 destinée plus particulièrement à être utilisée avec le schéma de la figure 14 , le transformateur 40 comprend deux circuits magnétiques élémentaires distincts 51 et 52 en un matériau magnétique et réalisés en forme de C ménageant ainsi des entrefers 51 a et 52a. Les branches centrales 51 b et 52b de ces noyaux 51 et 52 portent chacune deux demi-enroulements. Ainsi, la branche centrale 51 b porte une moitié de l'enroulement primaire 41 raccordée en série avec l'autre moitié de cet enroulement bobinée sur la branche centrale 52b, leurs bornes 41a et 41 b étant reliées à l'onduleur. Chacune de ces moitiés de l'enroulement primaire 41 est couplée respectivement à l'un des demi-enroulements secondaires 43 et 44. Ces demi-enroulements font dans ce cas office à la fois de moitié de secondaire et de self de lissage Lalis1 respectivement Lalis2. La figure 17 montre également les bornes 42 et 43a, 44a de ces demi-enroulements secondaires 43 et 44.

Dans la variante de la figure 18 qui est applicable aussi bien au schéma de la figure 14 qu'à celui de la figure 15, le transformateur 40 ou 45 comporte un noyau d'une seule pièce 53 de même forme que le noyau 49c de la figure 16. Si cet agencement est utilisé pour la réalisation du transformateur 40 du montage de la figure 14, les branches extérieures 53a et 53b de ce noyau 53 portent respectivement les deux moitiés du primaire 41 avec lesquelles sont bobinés ensemble respectivement les deux demi-enroulements 43 et 44 du secondaire du transformateur 40. Ces derniers forment ici aussi à la fois les selfs de lissage Lalis1 et Lalis2. Par ailleurs, le noyau 53 comporte un entrefer 53c. On peut noter par ailleurs que la section des branches centrales délimitant l'entrefer 53c est égale à la somme des sections des branches extérieures 53a et 53b. La figure 18 indique également les références relatives aux bornes des divers enroulements, telles qu'elles sont montrées sur la figure 14.

Par ailleurs, sur la figure 18, on a noté entre parenthèses les références portant sur les éléments composant le transformateur 45 de la figure 15.

La figure 19 représente une variante de réalisation particulièrement avantageuse de composants magnétiques pouvant être utilisés dans l'unité de conversion de la figure 15.

Dans ce cas, le transformateur 45 comprend un circuit magnétique en forme de tore 60 sur lequel sont bobinées les paires de demi-enroulements respectifs 46a, 46b, 47a et 47b, tandis que la self 48 comprend un tore 61 sur lequel est bobiné son enroulement. Dans ce cas également, il convient de prévoir d'une part un noyau magnétique de forte perméabilité permettant de diminuer le courant de magnétisation donc les pertes et d'autre part un couplage serré entre les enroulements du primaire et du secondaire, comme indiqué sur la figure 15. Sur la figure 19, on a également reporté les références des diverses bornes des enroulements.

Tous les circuits magnétiques des figures 16 à 19 peuvent être réalisés de différentes façons. Par exemple, on peut envisager des noyaux en forme de E avec une pièce de fermeture en forme de I, une géométrie du type planar du ou des noyaux et des bobinages, des formes toriques des noyaux et autres. A partir des informations exposées ci-dessus, la réalisation de ces variantes de formes des éléments électromagnétiques appartient au domaine des connaissances de l'homme de métier. Les variantes qui viennent d'être décrites ont toutes pour but d'économiser du fer pour la réalisation des circuits magnétiques et/ou de réduire à une faible valeur le courant de circulation (composante continue du courant) parcourant la ou les selfs de lissage afin de diminuer le dimensionnement en courant et ainsi de diminuer les pertes.

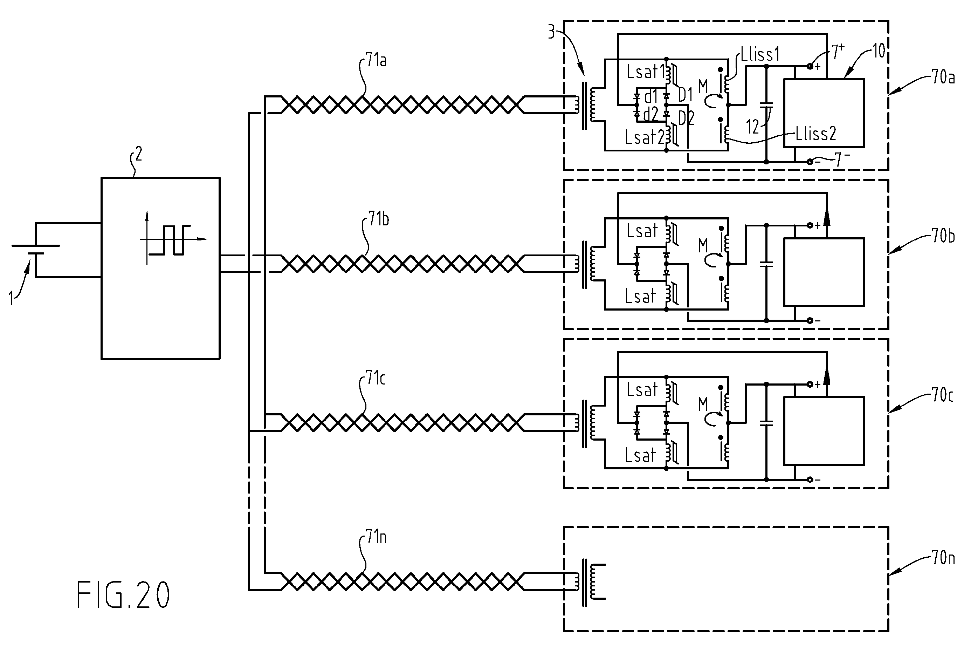

La figure 20 représente un premier exemple d'installation de distribution d'énergie électrique utilisant une pluralité de convertisseurs construits conformément à l'une ou l'autre des variantes qui viennent d'être décrites et plus particulièrement et de préférence celle représentée sur la figure 10.

Cette installation peut avantageusement être incorporée dans un satellite de télécommunications par exemple, dans lequel des unités de conversion 70a à 70n sont prévues au plus près des divers consommateurs d'énergie répartis dans le satellite. Dans ce cas, toutes les unités 70a à 70n sont alimentées en commun par une source de courant continu 1 tel que la barre de puissance primaire régulée ou non du sous-système de puissance du satellite débitant dans un onduleur 2 commun également à toutes les unités. Celles-ci sont alors reliées en parallèle à cet onduleur 2 par l'intermédiaire de câbles bifilaires individuels 71 a à 71 n.

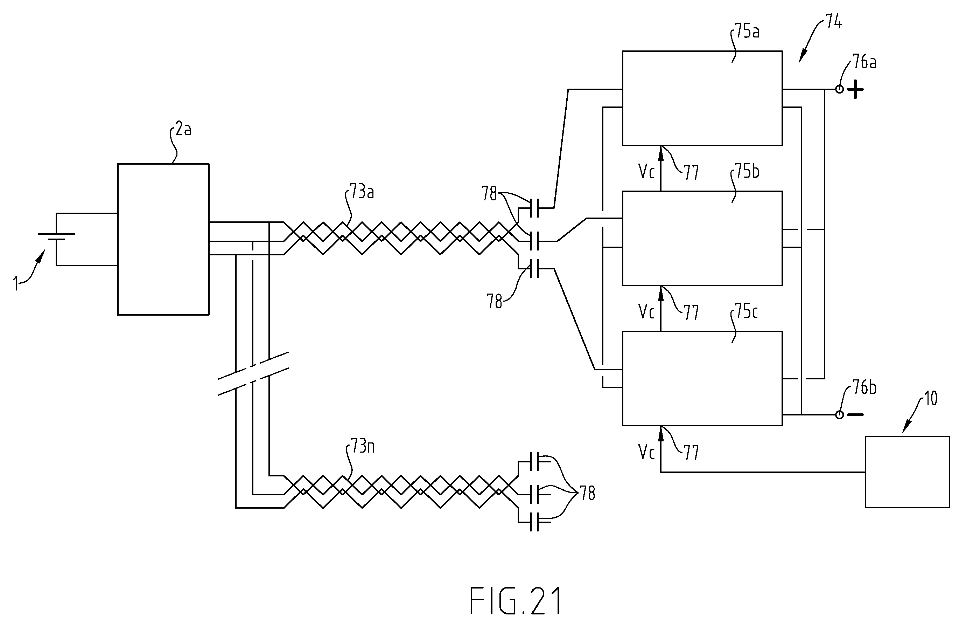

La figure 21 représente un second exemple d'installation de distribution d'énergie électrique du type décrit ci-dessus à propos de la figure 20. Cependant, dans ce cas, on prévoit un onduleur 2a qui transforme le courant continu de la source 1 en un courant triphasé débité par cet onduleur dans des câbles trifilaires 73a à 73n connectés à autant de groupes 74 d'unités de conversion dont seul celui connecté au câble 73a est ici représenté. Comme dans le cas de la figure 20, les unités de conversion peuvent être construites selon toutes les variantes de celles qui en ont été décrites précédemment.

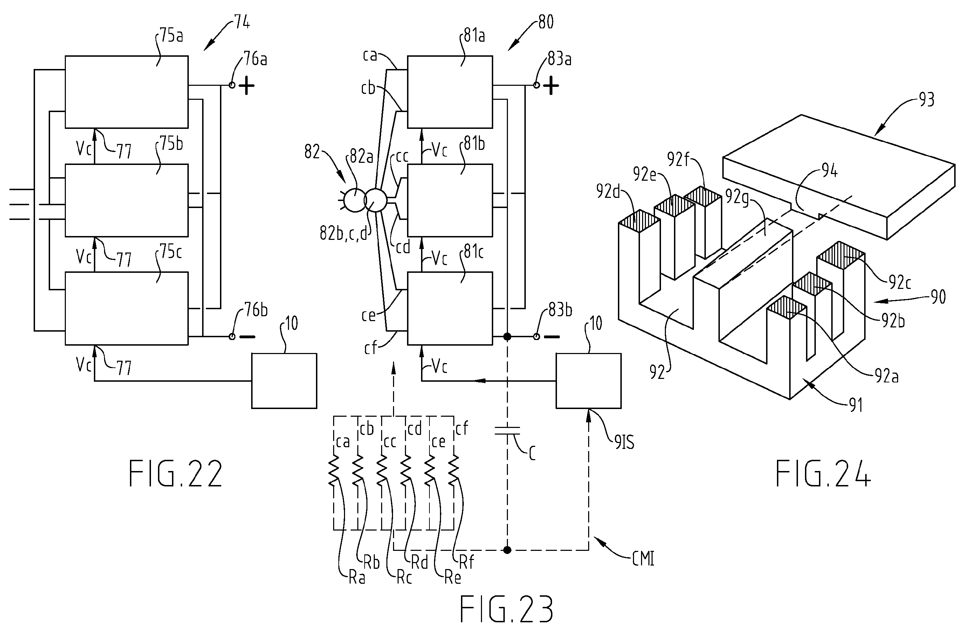

Les groupes d'unités de conversion 74 sont ici de type triphasé et comptent donc chaque fois trois unités, 75a, 75b et 75c, avec des transformateurs d'entrée individuels, non représentés, dont les primaires sont connectés en montage en étoile comme dans le présent exemple ou en montage en triangle comme dans l'exemple de la figure 22. Cette dernière figure représente un circuit par ailleurs identique à celui de la figure 21, les parties de celle-ci situées en amont des unités de conversion étant omises pour simplifier le dessin. Dans les deux cas, les sorties en courant continu, fournies sur les bornes 76a et 76b des unités de conversion 75a , 75b et 75c de chaque groupe 74 sont connectées en parallèle. Dans ce cas, la tension de commande Vc peut être produite par un régulateur 10 commun appliquant cette tension en parallèle aux trois unités du groupe par l'intermédiaire des bornes 77.

On notera également que les câbles trifilaires 73a à 73n sont connectés aux primaires des transformateurs des unités de conversion par l'intermédiaire de capacités 78 (non visibles sur la figure 22) servant à compenser les inductances du câblage.

Le schéma de la figure 23 représente une autre variante de l'installation suivant l'invention, la figure ne montrant, ici aussi, qu'un seul groupe de conversion pour simplifier le dessin. Comme dans les variantes des figures 21 et 22, les unités de conversion sont rassemblées en groupes 80 de chacun trois unités de conversion 81a, 81b et 81c, étant entendu que comme précédemment, on peut prévoir un nombre n de groupes identiques répartis dans l'appareillage à alimenter (satellite par exemple) au plus près de ses consommateurs d'énergie. Dans le présent cas cependant, chaque groupe 80 d'unités de conversion comprend un transformateur d'entrée unique polyphasé 82 comportant ici un primaire triphasé 82a qui peut être connecté en étoile comme représenté ici ou en triangle à la partie amont (onduleur et câblage, notamment) du convertisseur comme représenté sur les figures 21 et 22.

Le transformateur 82 comporte trois secondaires indépendants 82b, 82c et 82d, ici non détaillés, alimentant respectivement les montages des trois unités de conversion 81a, 81b et 81c selon les schémas respectifs des unités de conversion telles que décrites précédemment.

Les sorties en courant continu des trois unités 81 a, 81b et 81c d'un groupe 80 sont raccordées en parallèle sur les bornes 83a et 83b et la tension de commande Vc engendrée par un régulateur commun 10 du groupe est appliquée en parallèle aux trois unités du groupe 80.

Comme dans le cas des unités de conversion élémentaires illustré sur la figure 3, ce régulateur 10 peut mettre en oeuvre une limitation ou une régulation de courant par exemple à partir d'une image du courant de sortie Is. A cet effet, on peut prévoir ici une cellule de mesure CMI. Ce circuit comprend deux résistances en série Ra à Rf par secondaire 82b, 82c, 82d du transformateur 82. Ces résistances sont connectées aux secondaires respectifs par leurs bornes ca à cf comme indiqué sur la figure 23, tandis que leurs bornes opposées sont reliées ensemble à une capacité de filtrage C et à une entrée de régulation de courant 9IS du régulateur 10. La capacité C est connectée en outre à la borne de sortie 83b du groupe. Les tensions alternatives ainsi recueillies sont moyennées dans le régulateur 10.

En s'inspirant du mode de réalisation représenté sur la figure 16 qui concerne un cas monophasé de réalisation des selfs de lissage, il est également possible selon une autre variante de réalisation dans les cas d'une réalisation triphasée des groupes d'unités de conversion de réunir sur un seul circuit magnétique 90 (figure 24) les bobinages de toutes les selfs de lissage en mettant en commun un entrefer comme cela a été fait dans la figure 16 pour l'entrefer 49f.

Un tel circuit magnétique 90 est représenté en perspective schématique sur la figure 24.

Il comporte une pièce magnétique 91 ayant de profil l'aspect général d'un E avec une plaque de base rectangulaire 92 d'où s'étendent perpendiculairement, à partir de l'une de ses faces, des montants extérieurs 92a à 92f placés sur les petits bords de la plaque. Se dresse également sur cette plaque 92 une jambe centrale 92g s'étendant sur toute la largeur de la plaque et à mi-chemin entre les montants 92a à 92f.

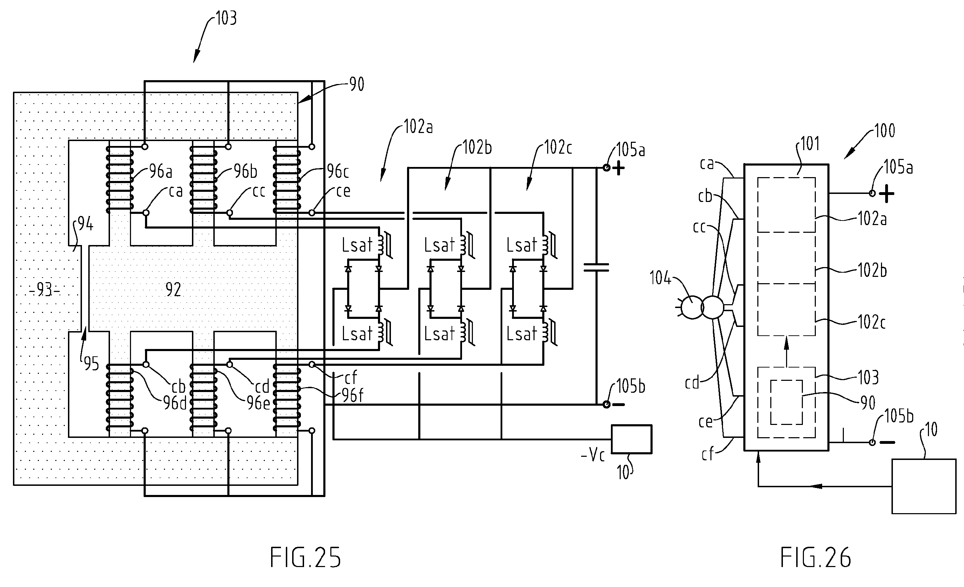

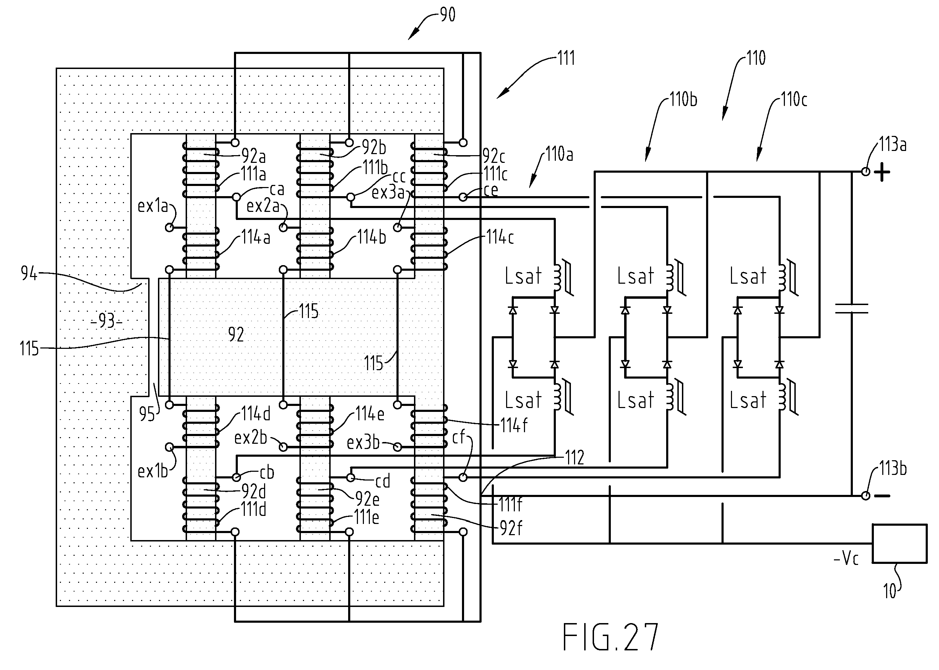

Ceux-ci ont tous une section identique et ils ont des longueurs égales légèrement supérieures à celle de la jambe centrale 92g dont la section est égale à la somme des sections des montants 92a à 92f. La pièce magnétique 91 est complétée par une plaque de fermeture de flux 93 de même dimensions que la plaque de base 91 et, le cas échéant, pourvue sur la face tournée vers celle-ci d'une nervure centrale 94 centrée sur la jambe centrale 92g qu'elle recouvre entièrement et avec laquelle elle définit un entrefer unique 95 (voir figures 25 et 27).

Avec l'unité magnétique 91, il est possible de former plusieurs variantes de réalisation, les figures 25 et 26 montrant une première de ces variantes, étant entendu que la figure 25 est une représentation schématique à deux dimensions seulement du circuit magnétique en n'ayant pour but que de montrer les parcours magnétiques. La figure ne reflète donc pas la réalité de la construction de l'ensemble électromagnétique.

Dans ce cas, chaque groupe de conversion 100 comprend un ensemble 101 formé des trois unités de conversion 102a, 102b et 102c, dites ici « imbriquées », étant entendu que ces trois unités sont associées à un ensemble électromagnétique 103 commun qui en forme les selfs de lissage utilisant le circuit magnétique 90 représenté sur la figure 24. L'ensemble 101 de ce groupe 100 est alimenté par un unique transformateur triphasé 104. Plusieurs de ces groupes tel que le groupe 100 peuvent constituer une installation d'alimentation électrique, les transformateurs 104 pouvant alors être branchés sur un onduleur commun ou chacun sur un onduleur distinct. Le groupe fournit une tension de sortie continue sur des bornes 105a et 105b et est associé à un régulateur 10 du type décrit précédemment.

L'unité magnétique 90 est représenté sur la figure 26 en association avec les unités de conversion « imbriquées 102a, 102b et 102c.

Les secondaires du transformateur 104 sont respectivement reliés à des connexions ca à cf que l'on retrouve également sur la figure 25. Elles sont reliées à des extrémités d'enroulements 96a à 96f bobinés respectivement sur les montants 92a à 92f du circuit magnétique 90 et formant chacun une self de lissage appartenant aux unités de conversion 102a, 102b et 102c correspondantes. Le sens de bobinage des enroulements 96a à 96f est tel que les flux dus aux composantes continues de courant qui les parcourent traversent l'entrefer 95 dans le même sens.

L'avantage d'une unité magnétique unique utilisée pour toutes les selfs de lissage d'un groupe triphasé de conversion consiste en un gain de dimensionnement en courant, d'encombrement et de poids ce qui est particulièrement recherché dans l'environnement d'un satellite artificiel.

Une autre variante de réalisation utilisant un circuit magnétique commun tel que 90 pour constituer les selfs de lissage intégrées avec le transformateur, est représentée sur la figure 27. Le schéma de cette variante équivaut à une version triphasée de celle, monophasée, de la figure 14 dans laquelle une unité de conversion comprend un transformateur d'entrée dont le secondaire joue également le rôle de self de lissage.

Dans ce cas, on prévoit donc au moins un groupe 110 de trois unités de conversion 110a, 110b et 110c dont les selfs de lissage sont formées par des demi-enroulements respectifs 111 a, 111 d; 111 b, 111 e; 111c, 111 f bobinés respectivement sur les montants 92a, 92d; 92b, 92e; 92c, 92f du circuit magnétique. Ces enroulements forment également les secondaires du transformateur (ici désignés globalement par la référence 111) du convertisseur et ils ont tous un point milieu commun 112 (équivalent du point milieu 42 de la figure 14) raccordé à la borne négative 113b de la sortie du convertisseur, la borne positive portant la référence 113a.

Selon une conception particulièrement avantageuse de cette variante, autour des montants 92a à 92f du circuit magnétique sont bobinés non seulement des demi-enroulements 111 a à 111 f, mais également des demi-enroulements respectifs 114a, 114d; 114b, 114e; 114c, 114f dont les paires associées sont les portions correspondantes du primaire du transformateur 111. Les demi-enroulements de ces paires associées sont connectés entre eux par des interconnexions 115.

Le transformateur 111 ainsi construit de la figure 27 peut être raccordé à un onduleur triphasé (ici non représenté) en triangle ou en étoile. En désignant les connexions externes des primaires du transformateur 111 avec des références ex1 a, ex1 b, ex2a, ex2b, ex3a et ex3b, on obtient un montage en triangle en connectant à la phase 1, les connexions ex1 a et ex3b, à la phase 2 les connexions ex2a et ex1 b, et à la phase 3 les connexions ex3a et ex2b. On obtient un montage en étoile en connectant à la phase 1, la connexion ex1a, à la phase 2 la connexion ex2a, à la phase 3 la connexion ex3a et au point milieu les connexions ex1 b, ex2b et ex3b.

Toutes les variantes décrites ci-dessus en version triphasée peuvent également être réalisées en version polyphasée (c'est-à-dire un nombre de phases supérieur à trois) en appliquant les concepts de l'invention décrits ci-dessus. L'homme de métier saura réaliser de telles variantes polyphasées en adaptant en conséquence les versions triphasées qui viennent d'être décrites.

Les avantages des variantes tri- ou polyphasées sont importants.

Tout d'abord, pour une même fréquence de fonctionnement, on peut, en polyphasé, réduire la taille des dispositifs de filtrage compte tenu de l'augmentation dans ce cas de la fréquence de l'ondulation résiduelle par rapport à celle que l'on rencontre dans un montage monophasé qui est de 2.f. Cette fréquence de l'ondulation résiduelle devient 2.n.f, n étant le nombre d'unités de conversion dans un groupe polyphasé.

En outre, une conception polyphasée de l'installation selon l'invention permet d'en augmenter la puissance sans augmenter la puissance unitaire des composants de puissance utilisés, comme les diodes, les selfs saturables et les selfs de lissage. Il en résulte pour une puissance donnée globale de l'installation une réduction de poids, d'encombrement et de coût.

Enfin, une version polyphasée présente une meilleure tolérance aux pannes puisqu'une installation polyphasée pourrait encore fonctionner, certes en mode dégradé, avec une ou plusieurs phases non fonctionnelles, mais sans empêcher un fonctionnement réduit des consommateurs d'énergie. Ceci peut représenter un avantage particulier dans le contexte d'un satellite de télécommunication.

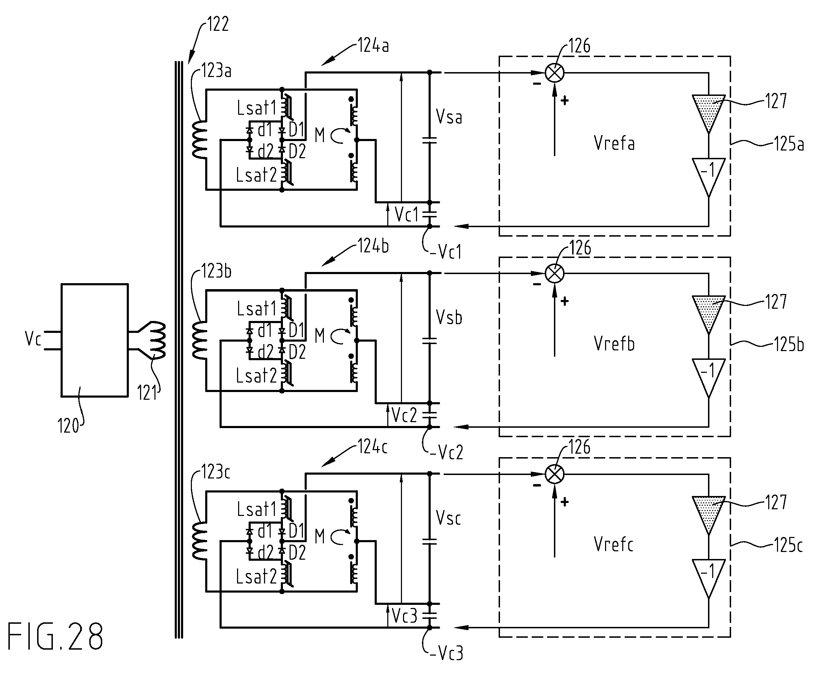

La figure 28 représente un agencement possible de la régulation d'un convertisseur selon l'invention dans lequel un onduleur non régulé 120 alimente en monophasé l'enroulement primaire 121 d'un transformateur 122 comportant trois enroulements secondaires 123a, 123b et 123c. Ceux-ci sont connectés respectivement à trois unités de conversion 124a, 124b et 124c conçus selon le principe de la figure 3, par exemple. Dans le cas de la figure 28, chacune de ces unités de conversion est associée à son propre régulateur 125a, 125b et 125c pouvant être construit comme le régulateur 10 des figures 3 et 9, par exemple. A chacun de ces régulateurs est appliquée une tension de référence indépendante, Vrefa, Vrefb et Vrefc respectivement qui fournit une référence pour une boucle de réglage symbolisée ici par les comparateurs 126 et les amplificateurs 127. Ainsi, chaque unité de conversion régule sa propre tension de sortie en fonction de la charge qui lui est appliquée.

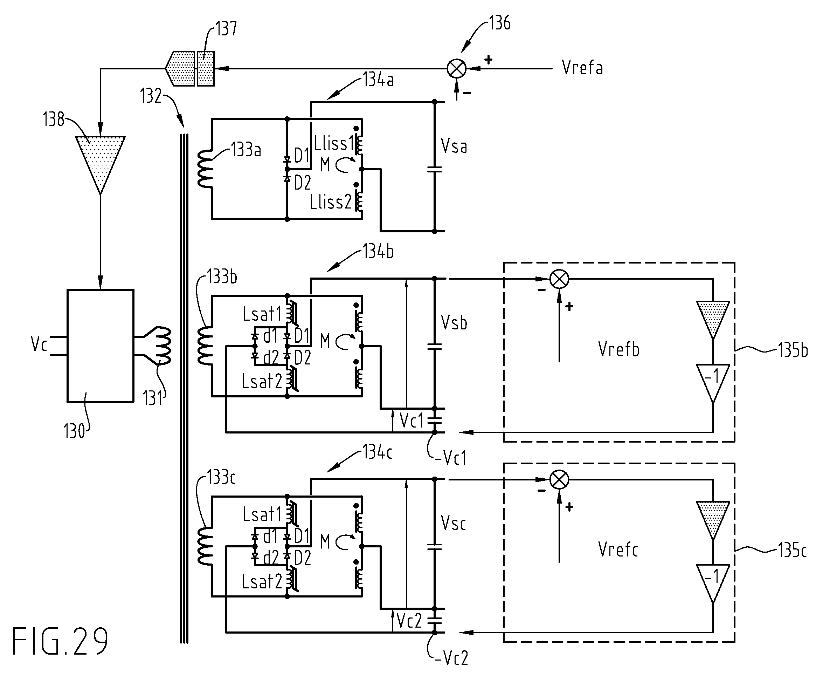

La figure 29 montre un autre exemple de régulation dans lequel un convertisseur selon l'invention comprend un onduleur 130 qui est ici régulé. Il alimente le primaire 131 d'un transformateur 132 ayant trois secondaires 133a, 133b, 133c qui sont raccordés respectivement à trois unités de conversion 134a, 134b et 134c, les unités 134b et 134c étant réalisées conformément à celle représentée sur la figure 3, par exemple. Ces unités de conversion sont associées à des régulateurs 135b et 135c conçus comme les régulateurs 125b à 125c de la figure 28 en employant le schéma de la figure 9 par exemple. Ces régulateurs reçoivent les tensions de référence Vrefb et Vrefc.

L'unité de conversion 134a est un simple redresseur doubleur de courant comprenant des diodes de puissance D1 et D2 et des selfs de lissage Lliss1 et Lliss2. La tension de sortie Vsa de cette unité de conversion est comparée à une tension de référence Vrefa dans un comparateur 136 qui engendre un signal de régulation pour l'onduleur régulé 130 auquel il est transmis par l'intermédiaire d'un dispositif d'isolation galvanique 137, tel qu'un opto-coupleur par exemple, et d'un amplificateur d'erreur 138 de type PID, par exemple. La sortie de cet amplificateur forme ainsi la consigne de tension pour l'onduleur 130.

Dans l'installation selon la figure 29, la régulation commandant l'onduleur 130 est faite en fonction des variations de la tension de sortie Vsa dues par exemple aux variations de sa charge. Cette régulation commande le régime de fonctionnement de l'onduleur 130 de manière à déterminer de façon précise la tension de sortie Vsa et de façon « grossière » par « cross-regulation » les tensions de sortie des autres unités de conversion. Les régulateurs 135b et 135c assurent une régulation fine des tensions de sortie des unités de conversion 134b et 134c.

Les solutions de régulation représentées sur les figures 28 et 29, comme d'ailleurs celles déjà décrites auparavant ont l'avantage important de travailler sans pertes notables d'énergie par opposition aux solutions classiques dans lesquelles les tensions de sortie des convertisseurs sont en général ajustées moyennant des ballasts dissipatifs.

Le procédé de conversion et le convertisseur continu-continu selon l'invention peuvent avantageusement être mis en oeuvre dans des dispositifs du type transformateurs tournants et réaliser simplement une source de puissance continue régulée uniquement par les éléments situés dans la partie mobile. Dans des applications spatiales, de tels transformateurs peuvent avantageusement remplacer des collecteurs tournants à balais avec contact qui restent soumis à usure.

Ces transformateurs tournants sont généralement difficiles à mettre en oeuvre d'un point de vue mécanique. L'utilisation d'un convertisseur selon l'invention permet de réduire ces difficultés de mise en oeuvre, car ce convertisseur ne nécessite qu'un seul enroulement secondaire, tout en assurant une régulation secondaire complètement indépendante.

Le convertisseur continu-continu selon l'invention peut également être intégré dans des systèmes de transmission de puissance sans contact, et en particulier dans des systèmes de recharge de batteries sans contact, par exemple pour des véhicules électriques. Le primaire du convertisseur est alors intégré à une structure fixe tandis que le secondaire est raccordé à la batterie à recharger.

En raison de ses capacités de contrôle de la tension délivrée par le secondaire, le convertisseur selon l'invention permet de garantir le contrôle de la charge de la batterie selon une tension et un courant de consigne, quelles que soient les variations de tension et de courant côté primaire.

Par ailleurs, on comprendra que le terme « onduleur » utilisé dans la description précédente englobe de manière générale tout dispositif apte à générer une tension alternative, et dans un mode de réalisation particulier peut désigner une génératrice électrique.

Le convertisseur selon l'invention peut ainsi avantageusement être mis en oeuvre dans le domaine de l'aéronautique ou de l'énergie éolienne.

**Revendications**

1. Procédé de conversion de l'énergie électrique fournie par une source d'énergie (1) délivrant une première tension (Vce) et un premier courant (Ice) continus ayant des premières valeurs respectives en de l'énergie électrique de sortie à une seconde tension (Vs) et avec un second courant (Is) continus ayant des secondes valeurs respectives, procédé consistant

   a) à soumettre le premier courant (Ice) à une opération d'ondulation (2) pour former un troisième courant (Ie) alternatif à une troisième tension (Ve), ledit troisième courant à ladite troisième tension pouvant être mono- ou polyphasé, 
   b) à changer par une opération de transformation (3), la valeur de ladite troisième tension (Ve), ou la tension de chaque phase de celle-ci, pour obtenir au moins une tension transformée ayant ladite seconde valeur pendant que simultanément, le courant sous ladite tension transformée est redressé dans au moins une unité de conversion en étant soumis à une commutation magnétique au moyen d'une première et d'une seconde selfs saturables (Lsat1, Lsat2), 
c) lesdites selfs saturables (Lsat1, Lsat2) étant reliées dans un circuit série de redressement composé de ladite première self saturable (Lsat1), d'une première et d'une deuxième diodes de puissance (D1, D2) en tête-bêche et de la seconde des selfs saturables (Lsat2), les deux diodes de puissance (D1, D2) étant shuntées par deux diodes de régulation (d1, d2) en tête-bêche avec des sens de redressement opposés à ceux des deux diodes de puissance (D1, D2), 
d) ledit circuit série étant connecté pour recevoir ladite tension transformée et pour délivrer ladite énergie électrique sous forme d'au moins une partie dudit second courant continu (Is), 
le procédé consistant en outre 
e) à réguler (10) au cours de chaque cycle de la tension transformée les instants de la commutation magnétique en injectant à travers lesdites diodes de régulation (d1, d2), une tension de commande (Vc) engendrée en fonction des variations de ladite seconde tension (Vs), et 
f) à commander pendant une première partie de chacun desdits cycles, sous l'effet de la saturation de ladite première self saturable (Lsat1), la conduction de ladite première diode de puissance (D1) et à commander pendant une deuxième partie de chaque cycle concerné, sous l'effet de la saturation de ladite deuxième self saturable (Lsat2), la conduction de ladite deuxième diode de puissance (D2), les instants de mise en saturation étant déterminés pendant ce cycle en fonction de ladite tension de commande (Vc), 
ledit procédé étant **caractérisé en ce qu'** 
g) il consiste également au cours de ladite première partie dudit cycle à bloquer ladite deuxième diode de puissance (D2) par la mise en conduction de ladite première diode (D1) de puissance et au cours de ladite deuxième partie du cycle considéré à bloquer ladite première diode de puissance (D1) par la mise en conduction de ladite deuxième diode de puissance (D2), de manière à créer un déphasage ($\partial$) entre ladite troisième tension (Ve) et ledit troisième courant (Ie) ou entre la tension et le courant de chaque phase de ceux-ci, l'angle de déphasage étant fonction de ladite tension de commande (Vc), et **en ce que** les étapes de procédé b), e) f) et g) sont effectuées, le cas échéant, pour chaque phase de ladite troisième tension (Ve).

2. Procédé de conversion selon la revendication 1, **caractérisé en ce qu'**il consiste également à lisser ledit courant redressé au moyen d'au moins une paire de selfs de lissage (Lliss1, Lliss2) en série branchée sur ladite tension transformée, ladite seconde tension (Vs) étant prélevée sur le noeud entre lesdites diodes de puissance et le noeud (11) entre les selfs de lissage (Lliss1, Lliss2) d'une paire.

3. Procédé de conversion selon l'une quelconque des revendications 1 et 2, **caractérisé en ce qu'**il consiste également à déterminer ladite tension de commande (Vc) en fonction de ladite partie dudit second courant (Is).

4. Procédé de conversion selon la revendications 3, **caractérisé en ce que** ladite tension de commande (Vc) est déterminée en fonction d'une image dudit second courant (Is) prise soit à partir de la moyenne filtrée de deux tensions prises respectivement entre les bornes (4, 5) desdites selfs saturables (Lsat1, Lsat2) opposées aux bornes qui sont connectées auxdites diodes de puissance (D1 et D2), et un point de référence commun (7-) à ladite seconde tension (Vs) et à ladite tension de commande (Vc), lorsqu'il s'agit du cas monophasé, soit à partir de l'ensemble des moyennes filtrées de ces tensions prises dans toutes les unités de conversion, lorsqu'il s'agit du cas polyphasé.

5. Procédé de conversion selon la revendication 3, **caractérisé en ce que** la détermination de ladite tension de commande (Vc) est effectuée à partir d'une image de ladite partie dudit second courant (Is) de la forme Vc/k-Vs, k étant une constante comprise entre 1 et 3.

6. Procédé de conversion selon l'une quelconque des revendications 1 à 5, **caractérisé en ce que** ladite tension de commande (Vc) est référencée par rapport au potentiel positif de ladite seconde tension (Vs).

7. Procédé de conversion selon l'une quelconque des revendications 1 à 5, **caractérisé en ce que** ladite tension de commande (Vc) est référencée par rapport au potentiel négatif de ladite seconde tension (Vs).

8. Convertisseur continu-continu pour la mise en oeuvre du procédé selon l'une quelconque des revendications 2 à 7, **caractérisé en ce qu'**il comprend un onduleur (2), une unité de conversion (UCa) et un régulateur (10), ladite unité de conversion (UCa) comprenant un transformateur comportant un primaire (3a) relié audit onduleur (2) et un secondaire (3b) dont les extrémités sont raccordées à un circuit série composé d'une première self saturable (Lsat1), de deux diodes de puissance (D1, D2) en tête-bêche et d'une seconde self saturable (Lsat2), les deux diodes de puissance (D1, D2) étant shuntées par deux diodes de régulation (d1, d2) en tête-bêche avec des sens de redressement opposés à ceux des deux diodes de puissance (D1, D2), ladite unité de conversion (UCa) comprenant également un second circuit série formé de deux selfs de lissage (Llis1, Llis2) et connecté en parallèle audit secondaire (3b) dudit transformateur (3), ladite seconde tension (Vs) étant prélevée entre le noeud commun (6) desdites diodes de puissance (D1, D2) et le noeud commun (11) desdites selfs de lissage (Llis1, Llis2), et ladite tension de commande (Vc) produite par ledit régulateur (10) étant appliquée entre le noeud commun (8) desdites diodes de régulation (d1, d2) et le noeud commun (11) desdites selfs de lissage (Llis1, Llis2).

9. Convertisseur continu-continu pour la mise en oeuvre du procédé selon l'une quelconque des revendications 3 à 7, prise en combinaison avec la revendication 1, **caractérisé en ce qu'**il comprend un onduleur (2), une unité de conversion (UCb) et un régulateur (10), ladite unité de conversion (UCb) comprenant un transformateur (40) comportant un primaire (41) relié audit onduleur (2) et un secondaire (43, 44) dont les extrémités (43a, 44a) sont raccordées à un premier circuit série composé d'une première self saturable (Lsat1), de deux diodes de puissance (D1, D2) en tête-bêche et d'une seconde self saturable (Lsat2), les deux diodes de puissance (D1, D2) étant shuntées par deux diodes de régulation (d1, d2) en tête-bêche avec des sens de redressement opposés à ceux des deux diodes de puissance (D1, D2), le secondaire dudit transformateur étant composé de deux demi-enroulements (43, 44) qui ont entre eux un faible couplage magnétique (M) et qui sont couplés, de préférence fortement, (M1, M2) respectivement chacun à une moitié de l'enroulement primaire (41) dudit transformateur (40), moyennant quoi lesdits demi-enroulements font respectivement office à la fois de demi-secondaire pour la transformation et de self de lissage (Lalis1, Lalis2), ladite seconde tension (Vs) étant prélevée entre le noeud commun (6) desdites diodes de puissance (D1, D2) et le noeud commun (42) desdits demi-enroulements (43, 44) dudit transformateur (40), et ladite tension de commande (Vc) produite par ledit régulateur (10) étant appliquée entre le noeud commun (8) desdites diodes de régulation (d1, d2) et le noeud commun (6) entre lesdites diodes de puissance (D1, D2).

10. Convertisseur continu-continu pour la mise en oeuvre du procédé selon l'une quelconque des revendications 3 à 7, prise en combinaison avec la revendication 1, **caractérisé en ce qu'**il comprend un onduleur (2), une unité de conversion (UCc) et un régulateur (10), ladite unité de conversion (UCc) comprenant un transformateur (45) comportant un primaire (46) relié audit onduleur (2) et composé de deux demi-enroulements primaires (46a, 46b) connectés en série et un secondaire (47) composé de deux demi-enroulements (47a, 47b) également connectés en série, les demi-enroulements (46a, 46b) du primaire formant respectivement avec les demi-enroulements (47a, 47b) du secondaire des paires composées chacune d'un demi-enroulement primaire et d'un demi-enroulement secondaire qui sont étroitement couplés entre eux (csa, csb), ledit primaire (46) étant connecté audit onduleur (2) et ledit secondaire (47) étant connecté à un circuit série composé d'une première self saturable (Lsat1), de deux diodes de puissance (D1, D2) en tête-bêche et d'une seconde self saturable (Lsat2), les deux diodes de puissance (D1, D2) étant shuntées par deux diodes de régulation (d1, d2) en tête-bêche avec des sens de redressement opposés à ceux des deux diodes de puissance (D1, D2), ledit convertisseur comprenant également une unique self de lissage (48) raccordée entre le noeud commun (47c) desdits demi-enroulements secondaires et une borne de sortie (7-) de ladite unité de conversion (UCc) portant le potentiel négatif de ladite seconde tension (Vs), la borne de sortie (7+) de cette unité portant le potentiel positif de celle-ci étant connectée au noeud commun (6) desdites diodes de puissance (D1, D2), et ladite tension de commande (Vc) produite par ledit régulateur (10) étant appliquée entre le noeud commun (8) desdites diodes de régulation (d1, d2) et ladite borne de sortie (7-) de l'unité de conversion (UCc) portant ledit potentiel négatif.

11. Convertisseur continu-continu selon la revendication 8, **caractérisé en ce que** lesdites selfs de lissage (Lliss1, Lliss2) comprennent un circuit magnétique commun (49c) sur lequel sont bobinés leurs enroulements respectifs (49a, 49b), ce circuit magnétique présentant un entrefer (49f) associé en commun aux deux selfs de lissage (Lliss1, Lliss2), lesdits enroulements (49a, 49b) ayant un faible couplage entre eux assuré uniquement à travers ledit circuit magnétique (49c), le sens de bobinage des deux enroulements (49a, 49b) étant tel que les flux qu'ils engendrent dans le circuit magnétique (49c) et qui sont dus aux composantes de courant continues de courant, traversent ledit entrefer (49f) dans le même sens.

12. Convertisseur continu-continu selon la revendication 9, **caractérisé en ce que** le primaire (41) dudit transformateur (40) est bobiné sur deux circuits magnétiques élémentaires distincts (51-52) pour former lesdits deux demi-enroulements primaires (41) connectés en série, chacun de ces demi-enroulements étant couplés fortement ensemble (M1, M2) avec un demi-enroulement respectif (43-44) du secondaire du transformateur (40) sur un circuit magnétique élémentaire (51-52).

13. Convertisseur continu-continu selon la revendication 12, **caractérisé en ce que** chacun desdits circuits magnétiques élémentaires (51-52) est réalisé en forme de C ménageant ainsi un entrefer (51 a-52a) ou en forme de tore.

14. Convertisseur continu-continu selon la revendication 11, **caractérisé en ce que** les enroulements (43, 44) desdites selfs de lissage (Laliss1, Laliss2) constituent également les secondaires dudit transformateur (40), et **en ce que** chacun de ces enroulements (43, 44) est bobiné ensemble sur ledit circuit magnétique (49c) de manière serrée, avec une moitié d'un enroulement (41 b) dudit transformateur (40), les deux moitiés d'enroulement formant le primaire de ce dernier.

15. Convertisseur continu-continu selon la revendication 10, **caractérisé en ce que** ledit transformateur (45) comprend un circuit magnétique (53, 60) sur lequel sont bobinés deux jeux distincts de demi-enroulements (46a, 47a ; 46b, 47b), ces jeux étant localisés à des endroits différents sur ledit circuit magnétique (53, 60) et composés chacun d'un demi-enroulement primaire (46a, 46b) et d'un demi-enroulement secondaire (47a, 47b), les demi-enroulements de chaque jeu étant bobinés avec un couplage serré.

16. Convertisseur continu-continu selon l'une quelconque des revendications 11, 14 et 15, **caractérisé en ce que** ledit circuit magnétique présente la forme d'un tore.

17. Convertisseur selon la revendication 10, **caractérisé en ce que** ladite self unique (48) comprend un circuit magnétique en forme de tore (61).

18. Installation de distribution d'énergie électrique, notamment pour satellite, **caractérisée en ce qu'**elle comprend une pluralité de convertisseurs (70a à 70n) selon l'une quelconque des revendications 8 à 17, ledit onduleur (2) étant commun à tous les convertisseurs (70a à 70n).

19. Installation de distribution d'énergie électrique notamment pour satellite, destinée à mettre en oeuvre le procédé selon l'une quelconque des revendications 1 à 7, **caractérisée en ce qu'**elle comprend un onduleur polyphasé (2a), une pluralité d'unités de conversion (75a, 75b, 75c), lesdites unités de conversion étant réparties en au moins un groupe (74) d'au moins trois unités, et, associé à chaque groupe un régulateur (10) pour effectuer ladite opération de régulation, **en ce que** chaque unité de conversion d'un groupe d'unités (74) comprend un transformateur pour effectuer ladite opération de transformation de ladite troisième tension (Ve), les transformateurs des unités d'un groupe (74) étant raccordés audit onduleur (2a) par l'intermédiaire d'un câble multifilaire (73a - 73n), **en ce que** ledit régulateur (10) applique aux unités d'un groupe (74) la même tension de commande (Vc) et **en ce que** dans un groupe (74) d'unités de conversion les sorties de celles-ci sont connectées en parallèle pour fournir sur deux bornes de sortie (76a, 76b) de ce groupe la somme de leurs courants de sortie individuelles en tant que second courant de sortie (Is).

20. Installation de distribution d'énergie électrique suivant la revendication 19, **caractérisée en ce que** dans chacun desdits groupes (74) d'unités de conversion (75a, 75b, 75c), celles-ci sont reliées en triangle ou en étoile audit onduleur (2a).

21. Installation de distribution d'énergie électrique notamment pour satellite, destinée à mettre en oeuvre le procédé selon l'une quelconque des revendications 1 à 7, **caractérisée en ce qu'**elle comprend un onduleur polyphasé, une pluralité d'unités de conversion (81a, 81b, 81c; 102a, 102b, 120c ; 110a, 110b, 110c), lesdites unités de conversion étant réparties en au moins un groupe (80 ; 100 ; 110) d'au moins trois unités et, associé à chaque groupe un régulateur (10) pour effectuer ladite opération de régulation, **en ce que** pour effectuer ladite opération de transformation de ladite troisième tension (Ve), les unités de conversion (81a, 81b, 81c; 102a, 102b, 120c ; 110a, 110b, 110c) d'un groupe d'unités (80 ; 100 ; 110) sont associées à un transformateur commun (82 ; 104; 111) à primaire polyphasé et présentant autant de secondaires qu'il y a d'unités de conversion (81a, 81b, 81c ; 102a, 102b, 120c ; 110a, 110b, 110c) dans le groupe, ce transformateur (80 ; 104 ; 111) étant raccordé audit onduleur (2a) par l'intermédiaire un câble multifilaire, **en ce que** ledit régulateur (10) applique aux unités d'un groupe (80 ; 100 ; 110) la même tension de commande (Vc) et **en ce que** dans un groupe d'unités de conversion (81a, 81b, 81c; 102a, 102b, 120c ; 110a, 110b, 110c) les sorties de celles-ci sont connectées en parallèle pour fournir sur deux bornes de sortie (83a, 83b ; 105a, 105b ; 113a ; 113b) de ce groupe la somme de leurs courants de sortie individuels en tant que second courant de sortie (Is).

22. Installation de distribution d'énergie électrique notamment pour satellite suivant la revendication 21, lorsqu'elle est destinée à mettre en oeuvre le procédé tel que défini dans l'une quelconque des revendications 2 à 7, **caractérisée en ce que** les selfs de lissage appartenant aux unités de conversion (102a, 102b, 102c) d'un même groupe (102) d'unités de conversion sont regroupées sur un circuit magnétique commun (90) sur lequel sont bobinés leurs enroulements respectifs (96a à 96f), ce circuit magnétique (90) présentant un entrefer unique (95), le couplage de ces enroulements entre eux étant assuré uniquement à travers ledit circuit magnétique commun (90), le sens de bobinage desdits enroulements étant tel que les flux dus aux composantes continues de courant qui parcourent ces enroulements traversent ledit entrefer (95) dans le même sens.

23. Installation de distribution d'énergie électrique notamment pour satellite suivant la revendication 22, **caractérisée en ce que** dans chaque groupe (110) d'unités de conversion (110a, 110b, 110c), les selfs de lissage regroupées sur ledit circuit magnétique commun (90) font respectivement également office de secondaires (111a à 111f) dudit transformateur unique (111) dont les enroulements primaires (114a à 114f) sont divisés respectivement en deux demi-enroulements couplés chacun à l'un des enroulements secondaires faisant également office de selfs de lissage de l'unité de conversion (110a, 110b, 110c) à laquelle ils sont reliés.

24. Installation de distribution d'énergie électrique notamment pour satellite, **caractérisée en ce qu'**elle comprend au moins un convertisseur suivant l'une quelconque des revendications 6 à 11, construit avec une pluralité d'unités de conversion (124a, 124b, 124c ; 134a, 134b, 134c) alimentées par un transformateur commun (122 ; 132), comprenant une pluralité de secondaires (123a, 123b, 123c ; 133a, 133b, 133c) à raison d'un par unité.

25. Installation de distribution d'énergie électrique selon la revendication 24, **caractérisée en ce que** chacune desdites unités de conversion (124a, 124b, 124c) est pourvue de son propre régulateur (125a, 125b, 125c).

26. Installation de distribution d'énergie électrique notamment pour satellite, **caractérisée en ce qu'** elle comprend au moins un convertisseur suivant l'une quelconque des revendications 8 à 11 construit avec une pluralité d'unités de conversion (134a-134b-134c) agencées en au moins un groupe d'unités de conversion alimentées par l'intermédiaire d'un transformateur commun (132) raccordé par son primaire (131) audit onduleur (130) et comprenant autant de secondaires (133a-133b-133c) qu'il y a d'unités de conversion dans un groupe,
**en ce que** l'une (134a) desdites unités de conversion d'un groupe est une unité de conversion pilote formée d'un redresseur mono-alternance dépourvu de moyens de déphasage,
**en ce que** ledit onduleur (130) est réglable,
**en ce que** l'installation comprend une boucle de réglage (136) agissant sur ledit onduleur (130) pour le régler en fonction d'un signal de différence entre un signal de référence de tension (Vrefa) et un signal fonction de la tension de sortie (Vsa) de ladite unité de conversion pilote (134a) et

**en ce que** les autres unités de conversion (134b-134c) d'un groupe sont pourvus de leur propre régulateur (135b-135c).

## Patentansprüche

1. Verfahren zum Umwandeln der elektrischen Energie, die von einer Energiequelle (1) bereitgestellt wird, die eine erste Gleichspannung (Vce) und einen ersten Gleichstrom (Ice) mit ersten jeweiligen Werten als elektrische Ausgangs-Energie mit einer zweiten Gleichspannung (Vs) und mit einem zweiten Gleichstrom (Is) mit jeweiligen zweiten Werten ausgibt,
wobei das Verfahren aufweist

   a) Aussetzen des ersten Stroms (Ice) einem ersten Wellen-Vorgang (2) zum Bilden eines Dritten Wechselstroms (Ie) mit einer dritten Spannung (Ve) wobei der dritte Strom mit der dritten Spannung einphasig oder mehrphasig sein kann,
   b) Ändern, durch einen Transformationsvorgang (3), den Wert der dritten Spannung (Ve) oder der Spannung von jeder Phase davon, zum Erhalten mindestens einer transformierten Spannung, die den zweiten Wert hat, während gleichzeitig der Strom unter der transformierten Spannung in mindestens einer Umwandlungs-Einheit gleichgerichtet wird, wobei er einer magnetischen Kommutation mittels einer ersten und einer zweiten sättigungsfähigen Drossel (Lsat1, Lsat2) unterzogen wird,
   c) die sättigungsfähigen Drosseln (Lsat1, Lsat2), die in eine serielle Gleichrichter-Schaltung geschaltet sind, die zusammengesetzt ist aus der ersten sättigungsfähigen Drossel (Lsat1), einer ersten und zweiten Leistungsdiode (D1, D2), die entgegengesetzt sind, und der zweiten sättigungsfähigen Drossel (Lsat2), wobei die zwei Leistungs-Dioden (D1, D2) durch zwei entgegengesetzte Regeldiodn (d1, d2) überbrückt sind, wobei die Gleichricht-Sinne denen der zwei Leistungsdioden (D1, D2) entgegengesetzt sind,
   d) wobei die Seriellschaltung zum Empfangen der transformierten Spannung und zum Ausgeben der elektrischen Energie in der Form von mindestens einem Teil des zweiten Gleichstroms (Is) geschaltet ist, wobei das Verfahren außerdem aufweist
   e) das Regeln (10) im Rahmen jedes Zyklus der transformierten Spannung der Zeitpunkte der magnetischen Kommutation durch Injizieren, durch die Regeldioden (d1, d2), einer Steuerspannung (Vc), die in Abhängigkeit der Änderungen der zweiten Spannung (Vs) erzeugt wird und

   f) das Steuern während eines ersten Teils von jedem der Zyklen unter dem Effekt der Sättigung der ersten sättigungsfähigen Drossel (Lsat1) der Leitung der ersten Leistungsdiode (D1) und das Steuern während eines zweiten Teils jedes betroffenen Zyklus unter dem Effekt der Sättigung der zweiten sättigungsfähigen Drossel (Lsat2) des Leitungszustands der zweiten Leistungs-Diode (D2), wobei die Sättigungszeitpunkte während eines Zyklus abhängig von der Steuerspannung (Vc) bestimmt werden,
wobei das Verfahren dadurch charakterisiert ist, dass
   g) es auch im Laufe des ersten Teils des Zyklus aus dem Blockieren der zweiten Leistungs-Diode (D2) durch das Versetzen der ersten Leistungs-Diode (D1) in den Leitungszustand und während des zweiten Teils des betrachteten Zyklus aus dem Blockieren der ersten Leistungs-Diode (D1) durch das Versetzen der zweiten Leistungs-Diode (D2) in den Leitungszustand besteht, in der Art, dass ein Phasenunterschied ($\partial$) zwischen der dritten Spannung (Ve) und dem dritten Strom (Ie) oder zwischen der Spannung und dem Strom jeder Phase davon erzeugt wird, wobei der Winkel der Phasenverschiebung von der Steuerspannung (Vc) abhängt und dadurch, dass die Verfahrensschritte b) e) f) und g) gegebenenfalls für jede Phase der dritten Spannung (Ve) durchgeführt werden.

2. Verfahren zum Umwandeln gemäß Anspruch 1, dadurch charakterisiert, dass es auch aus dem Glätten des gleichgerichteten Stroms mittels mindestens einem Paar von Glättungs-Drosseln "(Lliss1, Lliss2) in Serie, die an die transformierte Spannung angeschlossen sind, besteht,
wobei die zweite Spannung (Vs) dem Knoten zwischen den Leistungsdioden und dem Knoten (11) zwischen den Glättungs-Drosseln (Lliss1, Lliss2) eines Paares entnommen wird.

3. Verfahren zum Umwandeln gemäß einem der Ansprüche 1 und 2, dadurch charakterisiert, dass es auch aus dem Bestimmen der Steuerspannung (Vc) in Abhängigkeit von dem Teil des zweiten Stroms (Is) besteht.

4. Verfahren zum Umwandeln gemäß Anspruch 3, dadurch charakterisiert, dass die Steuerspannung (Vc) abhängig von einem Abbild des zweiten Stroms (Is) bestimmt wird, das entweder ausgehend von dem gefilterten Mittel von zwei Spannungen, die jeweils zwischen den Anschlüssen (4, 5) der sättigungsfähigen Drosseln (Lsat1, Lsat2) gegenüber den Anschlüssen, die mit den Leistungs-Dioden (D1 und D2) verbunden sind und einem gemeinsamen Referenzpunkt (7-) der zweiten Spannung (Vs) und der Steuer-Spannung (Vc) abgegriffen werden, wenn es sich um den einphasigen Fall handelt, oder ausgehend von der Menge von gefilterten Mittel dieser abgegriffenen Spannungen in allen Umwandlungs-Einheiten, falls es sich um den mehrphasigen Fall handelt.

5. Verfahren zum Umwandeln gemäß Anspruch 3, dadurch charakterisiert, dass die Bestimmung der Steuerspannung (Vc) ausgehend von einem Abbild des Teils des zweiten Stroms (Is) der Form Vc/k-Vs durchgeführt wird, wobei k eine Konstante ist, die zwischen 1 und 3 liegt.

6. Verfahren zum Umwandeln gemäß einem der Ansprüche 1-5,
dadurch charakterisiert, dass die Steuerspannung (Vc) bezüglich dem positiven Potenzial der zweiten Spannung (Vs) erfasst wird.

7. Verfahren zum Umwandeln gemäß einem der Ansprüche 1-5,
dadurch charakterisiert, dass die Steuerspannung (Vc) bezüglich dem negativen Potenzial der zweiten Spannung (Vs) erfasst wird.

8. Gleichstrom-Gleichstrom-Wandler zum Durchführen des Verfahrens gemäß einem der Ansprüche 2-7, dadurch charakterisiert, dass er einen Wechselrichter (2), eine Umwandlungs-Einheit (UCA) und einen Regler (10) aufweist, wobei die Umwandlungs-Einheit (UCa) einen Transformator aufweist, der eine Primärseite (3a) aufweist, die mit dem Wechselrichter (2) verbunden ist und eine Sekundärseite (3b) aufweist, deren Enden mit einer Seriellschaltung verbunden sind, die aus einer ersten sättigungsfähigen Drossel (Lsat1), zwei entgegengesetzten Leistungs-Dioden (D1, D2) und einer zweiten sättigungsfähigen Drossel (Lsat2) zusammengesetzt ist, wobei die zwei Leistungs-Dioden (D1, D2) durch zwei entgegengesetzte Regeldioden (d1, d2) überbrückt werden, wobei die Gleichricht-Richtungen denen der zwei Leistungs-Dioden (D1, D2) entgegengesetzt sind, wobei die Umwandlungs-Einheit (UCa) auch eine zweite seriell Schaltung aufweist, die aus zwei Glättungs-Drosseln (Llis1, Llis2) gebildet ist und parallel zu der Sekundärseite (3B) des Transformators (3) geschaltet ist, wobei die zweite Spannung (Vs) zwischen dem gemeinsamen Knoten (6) der Leistungs-Dioden (D1, D2) und dem gemeinsamen Knoten (11) der Glättungs-Drosseln (Llis1, Llis2) entnommen wird und die Steuer-Spannung (Vc), die von dem Regler (10) erzeugt wird, zwischen dem gemeinsamen Knoten (8) der Regeldiodn (d1, d2) und dem gemeinsamen Knoten (11) der Glättungs-Drosseln (Llis1, Llis2) angelegt wird.

9. Gleichstrom-Gleichstrom-Wandler zum Durchführen des Verfahrens gemäß einem der Ansprüche 3-7, in Kombination mit Anspruch 1, dadurch charakterisiert, dass er einen Wechselrichter (2), eine Umwandlungs-Einheit (UCb) und einen Regler (10) aufweist, wobei die Umwandlungs-Einheit (UCb) einen Transformator (40) aufweist, der eine Primärseite (41), die mit dem Wechselrichter (2) verbunden ist, und eine Sekundärseite (43, 44) aufweist, deren Enden (43a, 44a) mit einer ersten Seriellschaltung verbunden sind, die aus einer ersten sättigungsfähigen Drossel (Lsat1), zwei entgegengesetzten Leistungs-Dioden (D1, D2) und einer zweiten sättigungsfähigen Drossel (Lsat2) besteht, wobei die zwei Leistungs-Dioden (D1, D2) durch zwei entgegengesetzte Regeldioden (d1, d2) überbrückt sind, wobei die Gleichrichter-Richtungen denen der zwei Leistungs-Dioden (D1, D2) entgegengesetzt sind, wobei die Sekundärseite des Transformators aus zwei Halbwicklungen (43,44) besteht, die zwischen sich eine schwache magnetische Kopplung (M) haben und die besonders bevorzugt jede jeweils mit einer Hälfte der Primärwicklung (41) des Transformators (40) gekoppelt sind (M1, M2), wodurch die Halbwicklungen gleichzeitig als Halb-Sekundärseite für die Transformation und als Glättungs-Drosseln (Lalis1, Lalis2) dienen, wobei die zweite Spannung (Vs) zwischen dem gemeinsamen Knoten (6) der Leistungs-Dioden (D1, D2) und dem gemeinsamen Knoten (42) der Halbwicklungen (43,44) des Transformators (40) entnommen wird und die Steuerspannung (Vc), die durch den Regler (10) erzeugt wird, zwischen dem gemeinsamen Knoten (8) der Regeldioden (d1, d2) und dem gemeinsamen Knoten (6) zwischen den Leistungs-Dioden (D1, D2) angelegt wird.

10. Gleichstrom-Gleichstrom-Wandler zum Durchführen des Verfahrens gemäß einem der Ansprüche 3-7 in Kombination mit Anspruch 1, dadurch charakterisiert, dass er einen Wechselrichter (2), eine Umwandlungs-Einheit (UCc) und einen Regler (10) aufweist, wobei die Umwandlungs-Einheit (UCc) einen Transformator (45) aufweist, der eine Primärseite (46), die mit dem Wechselrichter (2) verbunden ist und aus zwei Primär-Halbwicklungen (46a, 46b), die seriell geschaltet sind, zusammengesetzt ist und eine Sekundärseite (47) aufweist, die aus zwei Halbwicklungen (47a, 47b) zusammengesetzt ist, die auch seriell geschaltet sind, wobei die Halbwicklungen (46a, 46b) der Primärseite jeweils mit den Halbwicklungen (47a, 47b) der Sekundärseite Paare bilden, jedes aus einer Primär-Halbwicklung und einer Sekundär-Halbwicklung, die eng miteinander gekoppelt sind (csa, csb), wobei die Primärseite (46) mit dem Wechselrichter (2) verbunden ist und die Sekundärseite (47) mit einer Seriellschaltung verbunden ist, die aus einer ersten sättigungsfähigen Drossel (Lsat1), aus zwei entgegengesetzten Leistungs-Dioden (D1, D2) und einer zweiten sättigungsfähigen Drossel (Lsat2) zusammengesetzt ist, wobei die zwei Leistungs-Dioden (D1, D2) durch zwei entgegengesetzte Regeldioden (d1, d2) mit Gleichricht-Richtungen entgegengesetzt zu denen der zwei Leistungs-Dioden (D1, D2) überbrückt werden, wobei der Wandler auch eine einzige Glättungs-Drossel (48) aufweist, die zwischen den gemeinsamen Knoten (47c) der Sekundär-Halbwicklungen und einen Ausgangsanschluss (7-) der Umwandlungs-Einheit (UCc), der das negative Potenzial der zweiten Spannung (Vs) trägt, geschaltet ist, wobei der Ausgangsanschluss (7+) dieser Einheit, der das positive Potenzial davon trägt, mit dem gemeinsamen Knoten (6) der Leistungs-Dioden (D1, D2) verbunden ist und die von dem Regler (10) erzeugte Steuerspannung (Vc) zwischen dem gemeinsamen Knoten (8) der Regeldiodn (d1, d2) und den Ausgangsanschluss (7-) der Umwandlungs-Einheit (UCc), der das negative Potenzial trägt, angelegt wird.

11. Gleichstrom-Gleichstrom-Wandler gemäß Anspruch 8,
dadurch charakterisiert, dass die Glättungs-Drosseln (Lliss1, Lliss2) eine gemeinsame magnetische Schaltung (49c) aufweisen, um die ihre jeweiligen Wicklungen (49a, 49b) gewickelt sind, wobei die magnetische Schaltung einen Luftspalt (49f) der gemeinsam zu den beiden Glättungs-Drosseln (Lliss1, Lliss2) gehört, aufweist,
wobei die Wicklungen (49a, 49b) eine schwache Kopplung zwischen sich haben, die nur einzig die magnetische Schaltung (49c) gewährleistet ist, wobei der Wicklung Sinn der zwei Wicklungen (49a, 49b) so ist, dass die Flüsse, die sie in der magnetischen Schaltung (49c) erzeugen und die den Gleichstrom-Komponenten des Stroms geschuldet sind, den Luftspalt (49f) in derselben Richtung durchlaufen.

12. Gleichstrom-Gleichstrom-Wandler gemäß Anspruch 9,
dadurch charakterisiert, dass die Primärseite (41) des Transformators (40) auf zwei unterschiedliche elementare magnetische Schaltungen (51-52) zum Formen der seriell geschalteten zwei Primär-Halbwicklungen (41) gewickelt sind, wobei jede der Halbwicklungen stark zusammen (im 1,2) mit einer jeweiligen Halbwicklung (43-44) der Sekundärseite des Transformators (40) auf einer elementaren magnetischen Schaltung (51-52) gekoppelt ist.

13. Gleichstrom-Gleichstrom-Wandler gemäß Anspruch 12,
dadurch charakterisiert, dass jede der elementaren magnetischen Schaltungen (51-52) in der Form eines C realisiert ist, und so einen Luftspalt (51a-52a) herbeiführt oder in der Form eines Torus realisiert ist.

14. Gleichstrom-Gleichstrom-Wandler gemäß Anspruch 11,
dadurch charakterisiert, dass die Wicklungen (43, 44) der Glättungs-Drosseln (Laliss1, Laliss2) auch die Sekundärseite des Transformators (40) bilden und dadurch, dass jede der Wicklungen (43, 44) auf die magnetische Schaltung (49c) auf enge Weise zusammen mit einer Hälfte der Wicklung (41b) des Transformators (40) gewickelt ist, wobei die zwei Hälften der Wicklung die Primärseite von letzterem bilden.

15. Gleichstrom-Gleichstrom-Wandler gemäß Anspruch 10,
dadurch charakterisiert, dass der Transformator (45) eine magnetische Schaltung (53, 60) aufweist, auf die zwei unterschiedliche Sätze von Halbwicklungen (46a, 47a; 46b, 47b) gewickelt sind, wobei sich die Sätze an unterschiedlichen Stellen auf der magnetischen Schaltung (53, 60) befinden und jede aus einer Primär-Halbwicklung (46a, 46b) und einer Sekundär-Halbwicklung (47a, 47b) zusammengesetzt ist, wobei die Halbwicklungen jedes Satzes mit einer engen Kopplung gewickelt sind.

16. Gleichstrom-Gleichstrom-Wandler gemäß einem der Ansprüche 11, 14 und 15, dadurch charakterisiert, dass die magnetische Schaltung die Form eines Torus hat.

17. Wandler gemäß Anspruch 10, dadurch charakterisiert, dass die einzelne Drossel (48) eine magnetische Schaltung in der Form eines Torus (61) aufweist.

18. Anordnung zum Verteilen elektrischer Energie, insbesondere für einen Satelliten, dadurch charakterisiert, dass sie eine Mehrzahl von Wandlern (70a bis 70n) gemäß einem der Ansprüche 8-17 aufweist, wobei der Wechselrichter (2) allen Wandlern (70a bis 70n) gemeinsam ist.

19. Anordnung zum Verteilen elektrischer Energie, insbesondere für einen Satelliten, vorgesehen zum Durchführen des Verfahrens gemäß einem der Ansprüche 1-7, dadurch charakterisiert, dass sie einen Mehrphasen-Wechselrichter (2a), eine Mehrzahl von Umwandlungs-Einheiten (75a, 75b, 75c), wobei die Umwandlungs-Einheiten in mindestens eine Gruppe (74) mit mindestens drei Einheiten eingeteilt ist und, zugehörig zu jeder Gruppe, einen Regler (10) zum Durchführen des Regelvorgangs aufweist, dadurch, dass jede Umwandlungs-Einheit einer Gruppe von Einheiten (74) einen Transformator zum Durchführen des Umwandlungsvorgangs der dritten Spannung (Ve) aufweist, wobei die Transformatoren der Einheiten einer Gruppe (74) mit dem Wechselrichter (2a) mittels eines mehrfaserigen Kabels (73a - 73n) verbunden sind, dadurch, dass der Regler (10) an die Einheiten einer Gruppe (74) dieselbe Steuerspannung (Vc) anlegt und dadurch, dass in einer Gruppe (74) von Umwandlungs-Einheiten die Ausgänge davon parallel geschaltet sind, um an zwei Ausgangsanschlüssen (76a, 76b) dieser Gruppe die Summe ihrer individuellen Ausgangsströme als zweiten Ausgangsstrom (Is) bereitzustellen.

20. Anordnung zum Verteilen elektrischer Energie gemäß dem Anspruch 19, dadurch charakterisiert, dass in jeder der Gruppen (74) von Umwandlungs-Einheiten (75a, 75b, 75c) diese in einem Dreieck oder in einem Stern mit dem Wechselrichter (2a) verbunden sind.

21. Anordnung zum Verteilen von elektrischer Energie, insbesondere für einen Satelliten, vorgesehen zum Durchführen des Verfahrens gemäß einem der Ansprüche 1 bis 7, dadurch charakterisiert, dass es einen Mehrphasen-Wechselrichter, eine Mehrzahl von Umwandlungs-Einheiten (81a, 81b, 81c; 102a, 102b, 120c; 110a, 110b, 110c) aufweist, wobei die Umwandlungs-Einheiten in mindestens eine Gruppe (80; 100; 110) mit mindestens drei Einheiten eingeteilt sind und, zugehörig zu jeder Gruppe, einen Regler (10) zum Durchführen des Regelvorgangs aufweist, dadurch, dass zum Durchführen des Umwandlungsvorgangs der dritten Spannung (Ve) die Umwandlungs-Einheiten (81a, 81b, 81c; 102a, 102b, 120c; 110a, 110b, 110c) einer Gruppe von Einheiten (80; 100; 110) zu einem gemeinsamen Transformator (82; 104; 111) mit einer mehrphasigen Primärseite gehören, der ebenso viele Sekundärseiten aufweist, wie es Umwandlungs-Einheiten (81a, 81b, 81c; 102a, 102b, 120c; 110a, 110b, 110c) in der Gruppe gibt, wobei der Transformator (80; 104; 111) mit dem Wechselrichter (2A) mittels eines mehrfaserigen Kabels verbunden ist, dadurch, dass der Regler (10) an die Einheiten einer Gruppe (80; 100; 110) dieselbe Steuerspannung (Vc) anlegt und dadurch, dass in einer Gruppe von Umwandlungs-Einheiten (81a, 81b, 81c; 102a, 102b, 120c; 110a, 110b, 110c) die Ausgänge davon parallel geschaltet sind, um an zwei Ausgangsanschlüssen (83a, 83b; 105a, 105b; 113a; 113b) dieser Gruppe die Summe ihrer individuellen Ausgangsströme als zweiten Ausgangsstrom (Is) bereitzustellen.

22. Anordnung zum Verteilen elektrischer Energie, insbesondere für einen Satelliten, gemäß Anspruch 21, die, wenn sie dazu vorgesehen ist, das Verfahren wie in einem der Ansprüche 2-7 definiert durchzuführen, dadurch charakterisiert ist, dass die Glättungsspulen, die zu den Umwandlungs-Einheiten (102a, 102b, 102c) derselben Gruppe (102) von Umwandlungs-Einheiten gehören, auf einer gemeinsamen magnetischen Schaltung (90) zusammengefasst sind, auf die ihre jeweiligen Wicklungen (96a bis 96f) aufgewickelt sind, wobei die magnetische Schaltung (90) einen einzigen Luftspalt (95) aufweist, wobei die Kopplung dieser Wicklungen untereinander einzig über die gemeinsame magnetische Schaltung (90) gewährleistet ist, wobei der Wicklungssinn der Wicklungen so ist, dass die Flüsse, die den gleich-Komponenten des Stroms, der diese Wicklungen durchläuft, den Luftspalt (95) in derselben Richtung durchlaufen.

23. Anordnung zur Verteilung elektrischer Energie, insbesondere für einen Satelliten, gemäß dem Anspruch 22, dadurch charakterisiert, dass in jeder Gruppe (110) von Umwandlungs-Einheiten (110a, 110b, 110c) die auf der gemeinsamen magnetischen Schaltung (90) zusammengefassten Glättungs-Drosseln auch als Sekundärseiten (111a bis 111f) des einzigen Transformators (111) dienen, dessen Primär-Wicklungen (114a bis 114f) jeweils in zwei Halbwicklungen unterteilt sind, von denen jede mit einer der sekundär Wicklungen gekoppelt ist, die auch als Glättungs-Drosseln der Umwandlungs-Einheit (110a, 110b, 110c) dienen, mit der sie verbunden sind.

24. Anordnung zum Verteilen elektrischer Energie, insbesondere für einen Satelliten, dadurch charakterisiert, dass sie mindestens einen Wandler gemäß einem der Ansprüche 6-11 aufweist, konstruiert mit einer Mehrzahl von Umwandlungs-Einheiten (124a, 124b, 124c; 134a, 134b, 134c), die von einem gemeinsamen Transformator (122; 132) mit Energie versorgt werden, der eine Mehrzahl von Sekundärseiten (123a, 123b, 123c; 133a, 133b, 133c), eine pro Einheit, aufweist.

25. Anordnung zum Verteilen elektrischer Energie gemäß Anspruch 24, dadurch charakterisiert, dass jede der Umwandlungs-Einheiten (124a, 124b, 124c) mit ihrem eigenen Regler (125a, 125b, 125c) versehen ist.

26. Anordnung zum Verteilen elektrischer Energie, insbesondere für einen Satelliten, dadurch charakterisiert, dass sie mindestens einen Wandler gemäß einem der Ansprüche 8-11 aufweist, konstruiert mit einer Mehrzahl von Umwandlungs-Einheiten (134a-134b-134c), die in mindestens einer Gruppe von Umwandlungs-Einheiten angeordnet sind, die mittels eines gemeinsamen Transformators (132) mit Energie versorgt werden, der mit seiner Primärseite (131) mit dem Wechselrichter (130) verbunden ist und ebenso viele Sekundärseiten (133a-133b-133c) aufweist, wie es Umwandlungs-Einheiten in einer Gruppe gibt, dadurch, dass eine (134a) der Umwandlungs-Einheiten in einer Gruppe eine richtungsweisende Umwandlungs-Einheit ist, die durch einen Einweggleichrichter ohne Phasenverschiebungsmittel gebildet ist,

dadurch, dass der Wechselrichter (130) regelbar ist, dadurch, dass die Anordnung eine Regelschleife (136) aufweist, die auf den Wechselrichter (130) einwirkt, um ihn in Abhängigkeit eines Differenzsignals zwischen einem Spannungs-Referenzsignal (Vrefa) und einem Signal, das von der Ausgangsspannung (Vsa) der richtungsweisenden Umwandlungs-Einheit (134a) abhängt, zu regeln und

dadurch, dass die anderen Umwandlungs-Einheiten (134b-134c) einer Gruppe mit ihrem eigenen Regler (135b-135c) versehen sind.

## Claims

1. A method for converting the electricity provided by an energy source (1) delivering a first direct voltage (Vce) and a first direct current (Ice) having first respective values into output electricity at a second direct voltage (Vs) and a second direct current (Is) having second respective values,
the method consisting of

   a) subjecting the first current (Ice) to an inversion operation (2) to form a third alternating current (Ie) at a third voltage (Ve), said third current at said third voltage being mono- or polyphase,
   b) changing, through a conversion operation (3), the value of said third voltage (Ve), or the value of each phase thereof, to obtain at least one converted voltage having said second value while simultaneously, the current at said converted voltage is rectified in at least one conversion unit while being subjected to magnetic switching using first and second saturable induction coils (Lsat1, Lsat2),
   c) said saturable induction coils (Lsat1, Lsat2) being connected in a serial rectifying circuit made up of said first saturable induction coil (Lsat1), first and second head-to-tail power diodes (D1, D2) and the second of the saturable induction coils (Lsat2), the two power diodes (D1, D2) being shunted by two head-to-tail regulating diodes (d1, d2) with rectification directions opposite those of the two power diodes (D1, D2),
   d) said serial circuit being connected to receive said converted voltage and to deliver said electricity in the form of at least part of said second direct current (Is),

the method also consisting of
   e) regulating (10), during each cycle of the converted voltage, the moments of the magnetic switching by injecting, through said regulating diodes (d1, d2), a control voltage (Vc) created as a function of the variations of said second voltage (Vs), and
   f) controlling, for a first portion of each of said cycles, under the effect of the saturation of said first saturable induction coil (Lsat), the conduction of said first power diode (D1), and controlling, for a second portion of each concerned cycle, under the effect of the saturation of said second saturable induction coil (Lsat2), the conduction of said second power diode (D2), the saturation moments being determined during that cycle as a function of said control voltage (Vc), said method being **characterized in that**
   g) it also consists, during said first portion of said cycle, of blocking said second power diode (D2) by conducting said first power diode (D1), and during said second portion of the considered cycle, of blocking said first power diode (D1) by conducting said second power diode (D2), so as to create a phase shift ($\partial$) between said third voltage (Ve) and said third current (Ie) or between the voltage and the current of each phase thereof, the phase shift angle depending on said control voltage (Vc), and **in that** the method steps b), e), f) and g) are carried out, if applicable, for each phase of said third voltage (Ve).

2. The conversion method according to claim 1, **characterized in that** it also consists of smoothing said rectified current using at least one pair of smoothing induction coils (Lliss1, Lliss2) in series connected on said converted voltage, said second voltage (Vs) being taken from the node between said power diodes and the node (11) between said smoothing induction coils (Lliss1, Lliss2) of one pair.

3. The conversion method according to any one of claims 1 and 2, **characterized in that** it also consists of determining said control voltage (Vc) as a function of said portion of the second current (Is).

4. The conversion method according to claim 3, **characterized in that** said control voltage (Vc) is determined as a function of an image of said second current (Is) taken either from the filtered average of two voltages respectively taken between the terminals (4, 5) of said saturable induction coils (Lsat1, Lsat2) opposite the terminals that are connected to said power diodes (D1 and D2), and a reference point (7-) shared by the second voltage (Vs) and said control voltage (Vc), in the monophase case, or from the set of filtered averages of these voltages in all of the conversion units, in the polyphase case.

5. The conversion method according to claim 3, **characterized in that** the determination of said control voltage (Vc) is done from an image of said second current (Is) of form Vc/k-Vs, k being a constant comprised between 1 and 3.

6. The conversion method according to any one of claims 1 to 5, **characterized in that** said control voltage (Vc) is referenced related to the positive potential of said second voltage (Vs).

7. The conversion method according to any one of claims 1 to 5, **characterized in that** said control voltage (Vc) is referenced related to the negative potential of said second voltage (Vs).

8. A DC-DC converter for implementing the method according to any one of claims 2 to 7, **characterized in that** it includes an inverter (2), a conversion unit (UCa) and a regulator (10), said conversion unit (UCa) including a transformer comprising a primary (3a) connected to said inverter (2) and a secondary (3b) whereof the ends are connected to a serial circuit made up of a first saturable induction coil (Lsat1), two head-to-tail power diodes (D1, D2) and a second saturable induction coil (Lsat2), the two power diodes (D1, D2) being shunted by two head-to-tail regulating diodes (d1, d2) with rectification directions opposite those of the two power diodes (D1, D2), said conversion unit (UCa) also including a second serial circuit formed from two smoothing induction coils (Llis1, Llis2) and connected in parallel to said secondary (3b) of said transformer (3), said second voltage (Vs) being taken between the shared node (6) of said power diodes (D1, D2) and the shared node (11) of said smoothing induction coils (Llis1, Llis2), and said control voltage (Vc) produced by said regulator (10) being applied between the shared node (8) of said regulating diodes (d1, d2) and the shared node (11) of said smoothing induction coils (Llis1, Llis2).

9. A DC-DC converter for implementing the method according to any one of claims 3 to 7, combined with claim 1, **characterized in that** it includes an inverter (2), a conversion unit (UCb) and a regulator (10), said conversion unit (UCb) including a transformer (40) comprising a primary (41) connected to said inverter (2) and a secondary (43, 44) whereof the ends (43a, 44a) are connected to a first serial circuit made up of a first saturable induction coil (Lsat1), two head-to-tail power diodes (D1, D2) and a second saturable induction coil (Lsat2), the two power diodes (D1, D2) being shunted by two head-to-tail regulating diodes (d1, d2) with rectification directions opposite those of the two power diodes (D1, D2), the secondary of said transformer being made up of two half-windings (43, 44) that have a weak magnetic coupling (M) between them and which are coupled, preferably strongly, respectively (M1, M2) each to half of the primary winding (41) of said transformer (40), in return for which said half-windings respectively serve both as half-secondary for the conversion and smoothing induction coil (Lalis1, Lalis2), said second voltage (Vs) being taken between the shared node (6) of said power diodes (D1, D2) and the shared node (42) of said half-windings (43, 44) of said transformer (40), and said control voltage (Vc) produced by said regulator (10) being applied between the shared node (8) of said regulating diodes (d1, d2) and the shared node (6) between said power diodes (D1, D2).

10. A DC-DC converter for implementing the method according to any one of claims 3 to 7, combined with claim 1, **characterized in that** it includes an inverter (2), a conversion unit (UCc) and a regulator (10), said conversion unit (UCc) including a transformer (45) comprising a primary (46) connected to said inverter (2) and made up of two primary half-windings (46a, 46b) connected in series and a secondary (47) made up of two half-windings (47a, 47b) also connected in series, the half-windings (46a, 46b) of the primary respectively forming, with the half-windings (47a, 47b) of the secondary, pairs each made up of a primary half-winding and a secondary half-winding that are closely coupled to one another (csa, csb), said primary (46) being connected to said inverter (2) and said secondary (47) being connected to a serial circuit made up of a first saturable induction coil (Lsat1), two head-to-tail power diodes (D1, D2) and a second saturable induction coil (Lsat2), the two power diodes (D1, D2) being shunted by two head-to-tail regulating diodes (d1, d2) with rectification directions opposite those of the two power diodes (D1, D2), said converter also including a single smoothing induction coil (48) connected between the shared node (47c) of said secondary half-windings and an output terminal (7-) of said conversion unit (UCc) supporting the negative potential of said second voltage (Vs), the output terminal (7+) of said unit supporting the positive potential thereof being connected to the shared node (6) of said power diodes (D1, D2), and said control voltage (Vc) produced by said regulator (10) being applied between the shared node (8) of said regulating diodes (d1, d2) and said output terminal (7-) of the conversion unit (UCc) supporting said negative potential.

11. The DC-DC converter according to claim 8, **characterized in that** said smoothing induction coils (Lliss1, Lliss2) include a shared magnetic circuit (49c) on which their respective windings (49a, 49b) are wound, said magnetic circuit having an air gap (49f) associated in common with the two smoothing induction coils (Lliss1, Lliss2), said windings (49a, 49b) having a low coupling with one another ensured only through said magnetic circuit (49c), the winding direction of the two windings (49a, 49b) being such that the flows they create in the magnetic circuit (49c) and which are due to the direct current components, pass through said air gap (49f) in the same direction.

12. The DC-DC converter according to claim 9, **characterized in that** the primary (41) of said transformer (40) is wound on two distinct elementary magnetic circuits (51-52) to form said two primary half-windings (41) connected in series, each of these half-windings being strongly coupled together (M1, M2) with a respective half-winding (43-44) of the secondary of the transformer (40) on an elementary magnetic circuit (51-52).

13. The DC-DC converter according to claim 12, **characterized in that** each of said elementary magnetic circuits (51-52) is made in the shape of a C thereby forming an air gap (51 a-52a), or in the form of a toroid.

14. The DC-DC converter according to claim 11, **characterized in that** the windings (43, 44) of said smoothing induction coils (Laliss1, Laliss2) also make up the secondaries of said transformer (40), and **in that** each of these windings (43, 44) is wound together on said magnetic circuit (49c) tightly, with half of a winding (41 b) of said transformer (40), said two winding halves forming the primary thereof.

15. The DC-DC converter according to claim 10, **characterized in that** said transformer (45) includes a magnetic circuit (53, 60) on which two distinct sets of half-windings (46a, 47a; 46b, 47b) are wound, these sets being located in different places on said magnetic circuit (53, 60) and each made up of a primary half-winding (46a, 46b) and a secondary half-winding (47a, 47b), the half-windings of each set being wound with a tight coupling.

16. The DC-DC converter according to any one of claims 11, 14 and 15, **characterized in that** said magnetic circuit is ring-shaped.

17. The converter according to claim 10, **characterized in that** said single induction coil (48) includes a ring-shaped magnetic circuit (61).

18. An electricity distribution facility, in particular for satellites, **characterized in that** it includes a plurality of converters (70a to 70n) according to any one of claims 8 to 17, said inverter (2) being shared by all of the converters (70a to 70n).

19. An electricity distribution facility, in particular for satellites, designed to implement the method according to any one of claims 1 to 7, **characterized in that** it includes a polyphase inverter (2a), a plurality of conversion units (75a, 75b, 75c), said conversion units being distributed in at least one group (74) of at least three units and, associated with each group, a regulator (10) to perform said regulation operation, **in that** each conversion unit of a group of units (74) includes a transformer to perform said conversion operation of said third voltage (Ve), the transformers of the units of a group (74) being connected to said inverter (2a) by means of a multi-line cable (73a - 73n), **in that** said regulator (10) applies the same control voltage (Vc) to the units of a group (74), and **in that** in a group (74) of conversion units, the outlets thereof are connected in parallel to provide, on two output terminals (76a, 76b) of that group, the sum of their individual output currents as second output current (Is).

20. The electricity distribution facility according to claim 19, **characterized in that** in each of said groups (74) of conversion units (75a, 75b, 75c), they can be connected in a triangle or star to said inverter (2a).

21. An electricity distribution facility, in particular for satellites, designed to implement the method according to any one of claims 1 to 7, **characterized in that** it includes a polyphase inverter, a plurality of conversion units (81 a, 81 b, 81 c; 102a, 102b, 120c; 110a, 110b, 110c), said conversion units being distributed in at least one group (80; 100; 110) of at least three units, and, associated with each group, a regulator (10) for performing said regulating operation, **in that** for performing said conversion operation of said third voltage (Ve), the conversion units (81 a, 81 b, 81 c; 102a, 102b, 120c; 110a, 110b, 110c) of one group of units (80; 100; 110) are associated with a shared transformer (82; 104; 111) with a polyphase primary and having as many secondaries as there are conversion units (81 a, 81 b, 81 c; 102a, 102b, 120c; 110a, 110b, 110c) in the group, this transformer (80; 104; 111) being connected to said inverter (2a) by means of a multi-line cable, **in that** said regulator (10) applies the same control voltage (Vc) to the units of a group (80; 100; 110), and **in that** in a group of conversion units (81 a, 81 b, 81 c; 102a, 102b, 120c; 110a, 110b, 110c), the outputs thereof are connected in parallel to provide, on two output terminals (83a, 83b; 105a, 105b; 113a; 113b) of that group, the sum of their individual output currents as second output current (Is).

22. The electricity distribution facility, in particular for satellites, according to claim 21, when it is intended to implement the method as defined in any one of claims 2 to 7, **characterized in that** the smoothing induction coils belonging to the conversion units (102a, 102b, 102) of a same group (102) of conversion units can advantageously be grouped together on a shared magnetic circuit (90) on which their respective windings (96a, 96f) are wound, this magnetic circuit (90) having a single air gap (95), the coupling of these windings to one another being ensured only through said shared magnetic circuit (90), the winding direction of said windings being such that the flows due to the direct current components that pass through these windings pass through said air gap (95) in the same direction.

23. The electricity distribution facility, in particular for satellites, according to claim 22, **characterized in that** in each group (110) of conversion units (110a, 110b, 110c), the smoothing induction coils grouped together on said shared magnetic circuit (90) can respectively also serve as secondaries (111a to 111f) of said single transformer (111) whereof the primary windings (114a to 114f) are respectively divided into two half-windings each coupled to one of the secondary windings also serving as smoothing induction coils for the conversion unit (110a, 110b, 110c) to which they are connected.

24. An electricity distribution facility, in particular for satellites, **characterized in that** it includes at least one converter according to any one of claims 6 to 11, built with a plurality of conversion units (124a, 124b, 124c; 134a, 134b, 134c) powered by a shared transformer (122; 132), including a plurality of secondaries (123a, 123b, 123c; 133a, 133b, 133c) at a rate of one per unit.

25. The electricity distribution facility according to claim 24, **characterized in that** each of said conversion units (124a, 124b, 124c) is provided with its own regulator (125a, 125b, 125c).

26. An electricity distribution facility, in particular for satellites, **characterized in that**
it includes at least one converter according to any one of claims 8 to 11 built with a plurality of conversion units (134a-134b-134c) arranged in at least one group of conversion units powered by means of a shared transformer (132) connected by its primary (131) to said inverter (130) and including as many secondaries (133a-133b-133c) as there are conversion units in a group,
**in that** one (134a) of said conversion units of a group being able to be a pilot conversion unit formed by a mono-alternation rectifier with no phase shift means,
**in that** said inverter (130) is adjustable,
**in that** the facility includes an adjustment loop (136) acting on said inverter (130) to adjust it as a function of the difference signal between a voltage reference signal (Vrefa) and a signal depending on the output voltage (Vsa) of said pilot conversion unit (134a), and
**in that** the other conversion units (134b-134c) of a group then being provided with their own regulator (135b-135c).

EP 2 504 911 B1

FIG.1

FIG.2

26

FIG.3

FIG.4

FIG.5

FIG.7

FIG.6

a)

Vs=10V Is = 40mA
Vc=10V Ic = 2,5mA

Ie

Ve

Pmin

VLsat2/D2d2

VLsat1/D1d1

CH1  5.0V          CH2  5.0V          M2.0μs  250MS/s  4.0ns/pt
CH3  2.0A   Ω      CH4  10mA   Ω      A Ch2  ∫  100mV

b)

FIG.8

Vs=10V Is = 4A
Vc=18V Ic = 1mA

Ie

Ve

VLsat1/D1d1      Pmax      VLsat2/D2d2

CH1  10.0V         CH2  10.0V         M2.0μs  250MS/s  4.0ns/pt
CH3  2.0A   Ω      CH4  100mA   Ω     A Ch2  ∫  6.2V

FIG.9

FIG.10

FIG.11

FIG.12

FIG.13

FIG.14

FIG.15

FIG.16

FIG.17

FIG.18

FIG.19

FIG.20

FIG.21

**FIG.24**

**FIG.23**

**FIG.22**

FIG.26

FIG.25

FIG.27

EP 2 504 911 B1

FIG.28

EP 2 504 911 B1

FIG.29

**EP 2 504 911 B1**

**RÉFÉRENCES CITÉES DANS LA DESCRIPTION**

**Documents brevets cités dans la description**

- JP 2001275361 B
- US 5539630 A